# EUROPÄISCHE PATENTSCHRIFT

(11) **EP 1 831 414 B1**
(45) Veröffentlichungstag und Bekanntmachung des Hinweises auf die Patenterteilung: **13.07.2011**
(21) Anmeldenummer: 05850336.8
(22) Anmeldetag: 22.12.2005
(51) Int. Cl.: C22B 11/08

(54) **VERWENDUNG VON NICHTIONISCHEN TENSIDEN BEI DER METALLGEWINNUNG**
USE OF NON-IONIC SURFACTANTS IN THE PRODUCTION OF METALS
UTILISATION DE TENSIOACTIFS NON-IONIQUES DANS LA PRODUCTION DE METAUX

(30) Priorität: 24.12.2004 DE 102004063501; 28.02.2005 DE 102005009574
(43) Veröffentlichungstag der Anmeldung: 12.09.2007
(73) Patentinhaber: BASF SE, 67056 Ludwigshafen (DE)
(72) Erfinder: SEELMANN-EGGEBERT, Hans-Peter, 67117 Limburgerhof (DE); OETTER, Günter, 67227 Frankenthal (DE); BERASTAIN, Arturo, Lima (PE); OSTOS RIOS, Cesar, San Borja, Lima (PE)
(86) Internationale Anmeldenummer: PCT/EP2005/013909
(87) Internationale Veröffentlichungsnummer: WO 2006/069738

(56) Entgegenhaltungen:
- AU-A- 1 096 888
- DE-A1- 19 621 843
- US-A- 1 549 856
- US-A- 2 234 140
- US-A- 4 287 370
- US-A- 4 929 274
- ZA-A- 9 109 627
- KURT KOSSWIG, ULLMANN'S ENCYCLOPEDIA OF INDUSTRIAL CHEMISTRY: "Interfacial Phenomena" [Online] 15. Juni 2000 (2000-06-15), WILEY-VCH VERLAG GMBH & CO.KGAA. , XP002375392 Gefunden im Internet: URL:http://www.mrw.interscience.wiley.com/ ueic/articles/a25_747/sect1.html> [gefunden am 2006-03-31] das ganze Dokument
- KURT KOSSWIG, ULLMANN'S ENCYCLOPEDIA OF INDUSTRIAL CHEMISTRY: "Overvieuw of Surfactants" [Online] 15. Juni 2000 (2000-06-15), WILEY-VCH VERLAG GMBH & CO.KGAA. , XP002375393 Gefunden im Internet: URL:http://www.mrw.interscience.wiley.com/ ueic/articles/a25_747/sect2.html> [gefunden am 2006-03-31] das ganze Dokument
- KURT KOSSWIG, ULLMANN'S ENCYCLOPEDIA OF INDUSTRIAL CHEMISTRY: "Nonionic Surfactants" [Online] 15. Juni 2000 (2000-06-15), WILEY-VCH VERLAG GMBH & CO.KGAA. , XP002375395 Gefunden im Internet: URL:www.mrw.interscience.wiley.com/ueic/ar ticles/a25_747/sect7.html> [gefunden am 2006-03-31] das ganze Dokument
- ED. BY FATHI HABASHI: "Handbook of Extractive Metallurgy" 1997, WILEY-VCH , GERMANY , XP002375446 Seite 1220 - Seite 1225 Seite 1183 - Seite 1199

## Beschreibung

Die vorliegende Erfindung betrifft ein Verfahren zur Gewinnung von Metallen, insbesondere von Gold und/oder Silber, aus Materialien oder Mineralien, welche das entsprechende Metall enthalten, mit Hilfe einer wässrigen cyanidhaltigen Zusammensetzung.

Gold gehört zu den seltensten Elementen unseres Lebensraumes. So beträgt beispielsweise der Anteil von Gold an der festen Erdkruste etwa 4 mg/t (4 ppb). Gold befindet sich darüber hinaus im Quarzgestein in Form von Gängen, Adern usw. Hier ist das Gold oft begleitet von Pyrit, Arsenkies, Kupfer- und Silbererzen. Das meiste Gold kommt gediegen vor, wobei die meisten Goldflitter jedoch makroskopisch klein sind. Gold ist zumeist mit Silber legiert, kann aber auch Verunreinigungen von Kupfer, Platin und weiteren Metallen enthalten. Daneben findet man in der Natur auch einige Gold-Minerale. Hierbei handelt es vor allem um Telluride, beispielsweise Calaverit (AuTe₂), Sylvanit (AgAuTe₄) und Nagyagit [AuTe₂ · 6 Pb(S, Te)].

Die Goldgewinnung erfolgt nur noch selten durch Goldwäscherei. Heute spielen im wesentlichen zwei industrielle Verfahren eine bedeutende Rolle. Dazu wird goldhaltiges Material zunächst großtechnisch in Rahmen eines Erzabbaues gewonnen und das gewonnene goldhaltige Erz der *Amalgierung* oder der *Cyanidiaugerei* unterzogen.

Bei der *Amalgierung* wird das goldhaltige Gestein in Mühlen zermahlen und mit Wasser und Quecksilber vermischt. Das Gold bildet mit dem Quecksilber eine Legierung (Amalgam), aus der durch Destillation bei 600°C das Quecksilber abdestilliert werden kann. Durch das Verfahren können etwa zwei Drittel des Goldes aus dem Gestein herausgelöst werden.

Bei der *Cyanidlaugerei,* welche beispielsweise in Ullmann's Encyclopedia, 6. Auflage, 2000, Band 4.2 (elektronische Version) oder in Kirk-Othmer, Enzyclopedia of Chemical Technology, 3. Auflage, Vol. 11, Seiten 972 bis 992, und Vol. 21, Seiten 1 bis 15, beschrieben ist, wird das fein zermahlene Gestein mit einer Natrium- oder Kaliumcyanidlösung unter Zufuhr von Luftsauerstoff sowie gegebenenfalls in Gegenwart von Kalk versetzt. Das Gold geht dabei gemäß der folgenden Reaktionsgleichung eine komplexe Cyanidverbindung ein:

Au + 8 NaCN + O₂ + 2 H₂O → 4 Na[Au(CN)₂] + 4 NaOH

Aus der komplexen Cyanidverbindung kann das Gold durch Reduktion (beispielsweise mit Zinkspänen) rein gewonnen werden. Das Gold setzt sich während dieser Reduktion am Boden als Schwamm ab. Der Niederschlag wird filtriert, getrocknet und geröstet, danach mit Hilfe eines Flussmittels wie Borax geschmolzen und in Barren vergossen. Alternative Aufbereitungsverfahren sind die selektive Adsorption an Aktivkohle (z.B. carbon in pulp process - CIP) oder lonenaustauschem (z.B. resin in pulv process - RIP) mit nachfolgender Desorption mit konzentrierter Cyanidlösung bzw. Zinkcyanat bei Ionenaustauschern. Die Goldionen können aus den cyanidischen Komplexen elektrolytisch oder durch Zugaben von Zinkpulver reduziert werden. Die Cyanidlaugerei wird dabei vorzugsweise als Haufenlaugerei ("heap leaching") durchgeführt. Dabei werden Gesteinshaufen von im Allgemeinen 100.000 bis 500.000 t als Haufen aufgeschüttet und dann mit der Cyanidlauge von oben besprüht, so dass die Cyanidlauge durch das Gestein durchperkolieren bzw. durchrieseln kann. Dabei sammelt sich die mit Gold angereicherte Mutterlauge am Boden des Haufens an.

Das am häufigsten praktizierte Verfahren ist die *Cyanidlaugerei,* die sich die guten Komplexierungseigenschaften von Cyanidionen zunutze macht, um metallisches Gold aufzulösen und Goldionen von ihren natürlichen chemischen Partnern im Erz zu trennen.

Auch Silber wird vorzugsweise durch das Verfahren der Cyanidlaugerei, oftmals gemeinschaftlich mit Gold, gewonnen. Dabei wird das zu feinem Schlamm zerkleinerte Material unter guter Durchlüftung mit 0,1 bis 0,2 %iger Natriumcyanidlösung ausgelaugt, wbei sowohl metallisches Silber wie Silbersulfid und Silberchlorid als Dicyanoargentat (I) in Lösung gehen:

2 Ag + H₂O + ½ O₂ + 4 NaCN → 2 Na[Ag(CN)₂] +2 NaOH (1)

Ag₂S + 4 NaCN ↔ 2 Na[Ag(CN)₂] + Na₂S (2)

2 AgCl + 4 NaCN → 2 Na[Ag(CN)₂] + 2 NaCl (3)

Da die Reaktion (2) zu einem Gleichgewicht führt, muss bei der Auslaugung sulfidischer Silbererze das gebildete Natriumsulfid Na₂S durch Einblasen von Luft oxidiert (2 S²⁻ + 2 O₂ + H₂O → S₂O₃²⁻ + 2OH⁻) oder durch Zusatz von Bleisalz gefällt (Pb²⁺ + S²⁻ → PbS) und so aus dem Gleichgewicht entfernt erden. Aus den erhaltenen klaren Laugen fällt man das (edlere) Silber durch Eintragen von (unedlerem) Zink- oder Aluminiumstaub aus (2 Na[Ag(CN)₂] + Zn → Na₂[Zn(CN)₄] + 2 Ag), filtriert dann die Aufschlämmung durch Filterpresssen und schmilzt die so erhaltenen Presskuchen ein. Nachteilig an der Cyanidlaugerei sind jedoch die großen Mengen an Cyanidsalzen, welche zur Abtrennung des Metalls aus den metallhaltigen Materialien benötigt werden. So sind beispielsweise zur Gewinnung von Gold bzw. Silber → je nach gold- bzw. silberhaltigem Material - bis zu 300 g Cyanid pro Tonne Material erforderlich, wobei das Gold bzw. Silber, selbst bei großen Mengen an verwendeten Cyanidsalzen, noch nicht vollständig aus dem Ausgangsmaterial gelöst werden kann. üblicherweise werden nur 60 bis 90 % des vorhandenen Golds bzw. Silbers aus dem Ursprungsmaterial entfernt.

Aufgrund der hohen toxischen Wirkung von Cyanidsalzen sind derart große Mengen darüber hinaus ökologisch bedenklich.

Ferner erfordert die Cyanidlaugerei, die häufig als Haufenlaugerei durchgeführt wird einen erheblichen Zeitaufwand. So beträgt die Zeit, welche für einen üblichen Laugereiprozess erforderlich ist, je nach Ausgangsmaterial 30 bis 90 Tage.

Im Stand der Technik wird zur Verbesserung der Effektivität der Cyanidlaugerei der Zusatz von Tensiden zu der Cyanidlauge empfohlen, wodurch sich die erforderliche Menge an Cyanid und die erforderliche Dauer der Cyanidlaugerei verringern und die erreichbare Ausbeute an Gold bzw. Silber erhöhen lässt.

So beschreibt die US 5,827,348 die Verwendung von fluoraliphatischen Tensiden zur Cyanidlaugerei, wobei eine cyanidhaltige Lauge, welche aufgrund des Tensidzusatzes eine Oberflächenspannung von weniger als 40 Dyn/cm aufweist, verwendet wird.

ZA 8800823 A beschreibt die Verwendung von Natriumdioctylsulfosuccinaten, ethoxylierten Alkylphenolen und Fettsäuren als Hilfsmittel bei der Gofdextraktion.

ZA 9109627 A beschreibt die Verwendung von endgruppenverschlossenen Alkyletherethoxylaten als Hilfsmittel bei der Cyanidlaugerei zur Gewinnung von Gold.

US 4,929,274 beschreibt ein Verfahren zur Haufenlaugung, bei dem in der cyanidhaltigen Lauge ein Tensid verwendet wird. Bei dem Tensid handelt es sich um ethoxylierte Fettsäureester, Alkylsulfosuccinate oder Fettalkohole.

Auch die US 2003/0192403 A1 beschreibt die Verwendung von Tensiden als Extraktionshilfsmittel bei der Goldgewinnung. Bei den verwendeten Tensiden handelt es sich um ethoxylierte aliphatische Alkohole.

Trotz der Verwendung von Tensiden während der Cyanidlaugerei sind die Metallausbeuten, beispielsweise an Gold bzw. Silber, bezogen auf das verwendete Ausgangsmaterial, immer noch nicht zufriedenstellend. Auch die erforderliche Dauer der Laugung ist noch verbesserungswürdig. Darüber hinaus besteht weiterhin ein Bedarf, die erforderlichen Mengen an Cyanidsalzen in den Laugereilösungen zu verringern.

Technisch werden die beschriebenen Verfahren zur Verwendung der Tenside nur in geringem Maße genutzt, da durch die Verwendung der Tenside die Aufarbeitung der metallhaltigen Cyanidlauge erschwert wird.

Damit besteht die Aufgabe, ein Verfahren aufzufinden, um die Ausbeuten an Metall, insbesondere an Gold und/oder Silber, bezogen auf das verwendete Ausgangsmaterial, zu erhöhen. Darüber hinaus sollte das Verfahren dazu führen, die erforderliche Laugungsdauer sowie die zur Laugung erforderliche Menge an Cyanid vorzugsweise zu erniedrigen. Auch darf die Aufarbeitung der Cyanidlauge durch das darin vorhandene grenzflächenaktive Mittel nicht beeinträchtigt werden.

Gelöst wird die Aufgabe durch ein Verfahren zur Gewinnung von Metallen aus diese Metalle enthaltenden Materialien, umfassend die folgenden Verfahrensschritte:
(a) Bereitstellen eines gegebenenfalls gemahlenen metallhaltigen Materials;
(b) Bereitstellen einer Zusammensetzung gemäß Anspruch 1;
(c) Inkontaktbringen des metallhaltigen Materials in Gegenwart eines Oxidationsmittels mit der Zusammensetzung, wobei eine mit Metallcyanid-Komplexen angereicherte Mutterlauge erhalten wird.

Die Zusammensetzung ist dadurch gekennzeichnet, dass in einer mit NaOH auf einen pH-Wert von 9,8 bis 10,2 eingestellten wässrigen Lösung das nichtionische Tensid in einer Konzentration von 0,01 bis 0,2 Gew.-%, besonders bevorzugt von 0,01 bis 0,1 Gew.-%, insbesondere von 0,01 bis 0,05 Gew.-%, bei 23°C zu einer Erniedrigung des Kontaktwinkels auf Glas nach 1 Sekunde, besonders bevorzugt nach 0,5 Sekunden, um mindestens 20 °, insbesondere mindestens 30 °, speziell mindestens 40 °, führt.

In einer bevorzugten Ausführungsform der vorliegenden Erfindung weist die resultierende wässrige cyanidhaltige Zusammensetzung mit dem nichtionischen Tensid einen Kontaktwinkel auf Glas von kleiner 40 °, besonders bevorzugt kleiner 20 °, insbesondere kleiner 10°, auf.

Der Kontaktwinkel wird dabei auf einem extra-weißen Glasträger der Firma Gerhard Menzel Glasbearbeitungswerk GmbH & Co. KG, Braunschweig mit einer Objektträgerdicke von 1 mm gemessen. Die ungefähre Spezifikation des Glasobjektträgers ist dabei wie folgt:

### Ungefähre chemische Zusammensetzung:

| | | |
|---|---|---|
| Siliziumdioxid | SiO₂ | 72.20 % |
| Natriumoxid | Na₂O | 14.30% |
| Kaliumoxid | K₂O | 1.20 % |
| Calciumoxid | CaO | 6.40 % |
| Magnesiumoxid | MgO | 4.30 % |
| Aluminiumoxid | Al₂O₃ | 1.20 % |
| Eisenoxid | Fe₂O₃ | 0.03 % |
| Schwefeltrioxid | SO₃ | 0.30% |

Weitere Eigenschaften des Glases sind wie folgt:

| | |
|---|---|
| Mittlerer Expansions-Koeffizient | 90,6 x 10⁻⁷/C° |
| (20-300°) | |
| Dehnungspunkt log n 14.5 | 513°C |
| Erweichungs-Littleton Punkt | 720°C |

### Abstrahlung zweite Spiegetoberläche:

Totale Solarreflexion (M = 2) als Proportion der Normalreflexion einer zweiten Spiegeloberfläche bei Solar-Elevation von 30 °: 95.3 %

### Lichtdurchlässiakeit:

Totale Solardurchlässigkeit (M = 2) als Proportion der Normaldurchlässigkeit bei Solar-Elevation von 30 °; 91.6 %

### Lichtbrechungsindex

| | |
|---|---|
| Bei λ = 546.07 nm | 1.5171 |
| Dichtigkeit | 2.479 |

Der Glasträger wird vor der Messung des Kontaktwinkels mit Aceton gereinigt und im Trockenschrank bei 70°C für 2 Stunden getrocknet.

Die zur Bestimmung des Kontaktwinkels verwendete wässrige Lösung ist frei von Cyaniden.

In der erfindungsgemäßen Zusammensetzung wird ein nichtionisches Tensid ("Niotensid") verwendet. Das nichtionische Tensid wird vorzugsweise so gewählt, dass es unter den alkalischen Bedingungen der Metalllaugerei, insbesondere von Gold und/oder Silber, mit einem pH-Wert von vorzugsweise 8 bis 13, besonders bevorzugt 9 bis 12, insbesondere 9 bis 11, zu einer Erhöhung der Metallextraktion und gegebenenfalls einer Erniedrigung der Laugungsdauer führt.

Dabei ist das verwendete Niotensid in einer besonders bevorzugten Ausführungsform biologisch abbaubar, insbesondere leicht biologisch abbaubar.

Das nichtionische Tensid wird ausgewählt aus der Gruppe, bestehend aus Alkoholalkoxylaten der allgemeinen Formel (I)

R¹-O-(CH₂-CHR⁵-O-)ᵣ(CH₂-CH₂-O-)ₙ(CH₂-CHR⁶-O-)ₛ(CH₂-CHR²-O-)ₘH (I)

mit der Bedeutung
- R¹: mindestens einfach verzweigtes C₄₋₂₂-Alkyl oder -Alkylphenol,
- R²: C₃₋₄-Alkyl,
- R⁵: C₁₋₄-Alkyl,
- R⁸: Methyl oder Ethyl,
- n: mittlerer Wert von 1 bis 50,
- m: mittlerer Wert von 0 bis 20, vorzugsweise 0,5 bis 20,
- r: mittlerer Wert von 0 bis 50,
- s: mittlerer Wert von 0 bis 50,
wobei m mindestens 0,5 ist, wenn R⁵ Methyl oder Ethyl ist oder r den Wert 0 hat.

Ferner kann es sich um ein Gemisch aus 20 bis 95 Gew.-%, vorzugsweise 30 bis 95 Gew.% mindestens eines vorstehenden Alkoholalkoxylats und 5 bis 80 Gew.-%, vorzugsweise 5 bis 70 Gew.%, eines entsprechenden Alkoholalkoxylats, in dem R¹ jedoch ein unverzweigter Alkylrest mit gleicher Kohlenstoffzahl ist, handeln.

Ferner kann es sich um Alkoholalkoxylate der allgemeinen Formel (II)

R³-O-(CH₂-CH₂-O)ₚ(CH₂-CHR⁴-O-)_{q}H (II)

mit der Bedeutung
- R³: verzweigtes oder unverzweigtes C₄₋₂₂-Alkyl oder -Alkylphenol,
- R⁴: C₃₋₄-Alkyl,
- p: mittlerer Wert von 1 bis 50, vorzugsweise 4 bis 15,
- q: mittlerer Wert von 0,5 bis 20, bevorzugt 0,5 bis 4, bevorzugter 0,5 bis 2

handeln.

Ferner kann es sich um ein Gemisch aus 5 bis 95 Gew.% mindestens eines verzweigten Alkoholalkoxylats (II), wie es unmittelbar vorstehend beschrieben ist, und 5 bis 95 Gew.% eines entsprechenden Alkoholalkoxylats, in dem anstelle eines verzweigten Alkylrestes jedoch ein unverzweigter Alkylrest vorliegt.

In den Alkoholalkoxylaten der allgemeinen Formel (I) ist R² vorzugsweise Propyl, insbesondere n-Propyl.

Vorzugsweise weist in den Alkoholalkoxylaten der allgemeinen Formel (II) n einen mittleren Wert von 4 bis 15, besonders bevorzugt 6 bis 12, insbesondere 7 bis 10 auf.

Bevorzugt weist m einen mittleren Wert von 0,5 bis 4, besonders bevorzugt 0,5 bis 2, insbesondere 1 bis 2 auf. Der Ausdruck "mittlerer Wert" bezieht sich auf technische Produkte, in denen in den Einzelmolekülen unterschiedliche Anzahlen an Alkylenoxideinheiten vorliegen können. Er beschreibt den in technischen Produkten im Mittel vorliegenden Anteil der entsprechenden Alkylenoxid-Einheiten. Ein Wert von 0,5 bedeutet daher, dass im Mittel jedes zweite Molekül eine entsprechende Einheit trägt. Anstelle der Untergrenze von 0,5 tritt gemäß einer bevorzugten Ausführungsform der Erfindung für die Indizes n, m, p, q die Untergrenze 1.

r ist vorzugsweise 0. s ist vorzugsweise 0.

Der Rest R¹ ist vorzugsweise C₈₋₁₅-, besonders bevorzugt C₈₋₁₃-, insbesondere C₈₋₁₂ Alkylrest, der mindestens einfach verzweigt ist. Es können auch mehrere Verzweigungen vorliegen.

R⁵ ist vorzugsweise Methyl oder Ethyl, insbesondere Methyl.

R⁶ ist vorzugsweise Ethyl.

In den Gemischen liegen Verbindungen mit unverzweigten und mit verzweigten Alkoholresten R¹ vor. Dies ist beispielsweise der Fall bei Oxoalkoholen, die einen Anteil an linearen und einen Anteil an verzweigten Alkoholketten aufweisen. Beispielsweise weist ein C_{13/15}-Oxoalkohol häufig etwa 60 Gew.% vollständig linearer Alkoholketten, daneben aber auch etwa 40 Ges.-% α-Methyl-verzweigte und C₂₂-verzweigte Alkoholketten auf.

In den Alkoholalkoxylaten der allgemeinen Formel (II) ist R³ vorzugsweise ein verzweigter oder unverzweigter C₈₋₁₅-Alkylrest, besonders bevorzugt ein verzweigter oder unverzweigter C₈₋₁₃-Alkylrest und insbesondere ein verzweigter oder unverzweigter Cₐ₋₁₂-Alkylrest. R⁴ ist vorzugsweise Propyl, insbesondere n-Propyl. p weist vorzugsweise einen mittleren Wert von 4 bis 15, besonders bevorzugt einen mittleren Wert von 6 bis 12 und insbesondere einen mittleren Wert von 7 bis 10 auf. q weist vorzugsweise einen mittleren Wert von 0,5 bis 4, besonders bevorzugt 0,5 bis 2, insbesondere 1 bis 2 auf.

Entsprechend den Alkoholalkoxylaten der allgemeinen Formel (I) können auch die Alkoholalkoxylate der allgemeinen Formel (II) als Gemische mit unverzweigten und verzweigten Alkoholresten vorliegen.

Als den Alkoholalkoxylaten zugrunde liegende Alkoholkomponenten kommen nicht nur reine Alkanole in Betracht, sondern auch homologe Mischungen mit einem Bereich von kohlenstoffatomen. Beispiele sind C_{8/10}-Alkanole, C_{10/12}-Alkanole, C_{13/15}Alkanole, C_{12/15}-Alkanole. Auch Gemische mehrerer Alkanole sind möglich.

Die vorstehenden erfindungsgemäßen Alkanolalkoxylate oder Gemische werden vorzugsweise hergestellt durch Umsetzung von Alkoholen der allgemeinen Formel R¹-OH bzw. R³-OH oder Gemischen entsprechender verzweigter und unverzweigter Alkohole, gegebenenfalls zuerst mit C₃₋₆-Alkylenoxid, sodann mit Ethylenoxid und nachfolgend gegebenenfalls mit C₃₋₄-Alkylenoxid und sodann mit einem entsprechenden C₅₋₆-Alkylenoxid. Die Alkoxylierungen werden dabei vorzugsweise in Gegenwart von Alkoxylierungskatalysatoren durchgeführt. Dabei werden insbesondere basische Katalysatoren wie Kaliumhydroxid eingesetzt. Durch spezielle Alkoxylierungskatalysatoren wie modifizierte Bentonite oder Hydrotalcite, wie sie beispielsweise in WO 95/04024 beschrieben sind, kann die statistische Verteilung der Mengen der eingebauten Alkylenoxide stark eingeengt werden, so daß man "Narrow-Range"-Alkoxylate erhält.

In einer besonderen Ausführungsform der vorliegenden Erfindung handelt es sich um Alkoxylat-Gemische, enthaltend Alkoxylate der allgemeinen Formel (III)

C₅H₁₁CH(C₃H₇)CH₂O(B)ₚ(A)_{q}(B)ₙ(A)_{q}H (III)

mit der Bedeutung
- A: Ethylenoxy,
- B: jeweils unabhängig C₃₋₁₀-Alkylenoxy, vorzugsweise Propylenoxy, Butylenoxy, Pentylenoxy oder Gemische davon,
wobei Gruppen A und B in Form von Blöcken in der angegebenen Reihenfolge vorliegen,

| | |
|---|---|
| p | Zahl von 0 bis 10, |
| n | Zahl größer 0 bis 20, |
| m | Zahl größer 0 bis 20, |
| q | Zahl größer 0 bis 10, |
| p + n + m + q | mindestens 1 |

wobei

| | |
|---|---|
| 70 bis 99 Gew.-% | Alkoxylate A1, in denen C₅H₁₁ die Bedeutung n-C₅H₁₁ hat, und |
| 1 bis 30 Gew.% | Alkoxylate A2, in denen C₅H₁₁ die Bedeutung C₂H₅CH(CH₃)CH₂ |
| | und/oder CH₃CH(CH₃)CH₂CH₂ hat, |

im Gemisch vorliegen.

In der allgemeinen Formel (III) bedeutet p eine Zahl von 0 bis 10, vorzugsweise 0 bis 5, insbesondere 0 bis 3. Sofern Blöcke (B)ₚ vorliegen, ist p vorzugsweise eine Zahl von 0,1 bis 10, besonders bevorzugt 0,5 bis 5, insbesondere 1 bis 3.

In der allgemeinen Formel (III) bedeutet n vorzugsweise eine Zahl im Bereich von 0,25 bis 10, insbesondere von 0,5 bis 7, m ist vorzugsweise eine Zahl im Bereich von 2 bis 10, insbesondere 3 bis 6. B ist vorzugsweise Propylenoxy und/oder Butylenoxy, speziell Propylenoxy an beiden Positionen.

q ist vorzugsweise eine Zahl im Bereich von 1 bis 5, besonders bevorzugt im Bereich von 2 bis 3.

Die Summe p + n + m + q ist mindestens 1, vorzugsweise 3 bis 25, besonders bevorzugt 5 bis 15, insbesondere 7 bis 13.

In den Alkoxylaten liegen vorzugsweise 3 oder 4 Alkylenoxidblöcke vor. Gemäß einer Ausführungsform liegen an den Alkoholrest anschließend zunächst Ethylenoxy-Einheiten, daran anschließend Propylenoxid-Einheiten und daran anschließend Ethylenoxy-Einheiten vor. Gemäß einer weiteren Auführungsform liegen an den Alkoholrest anschließend zunächst Propylenoxy-Einheiten, so dann Ethylenoxy-Einheiten, so dann Propylenoxy-Einheiten und abschließend Ethylenoxy-Einheiten vor. Anstelle der Propylenoxy-Einheiten können auch die anderen angegebenen Alkylenoxy-Einheiten vorliegen.

p, n, m und q bezeichnen dabei einen mittleren Wert, der sich als Durchschnitt für die Alkoxylate ergibt. Daher können p, n, m, q auch von ganzzahligen Werten abweichen. Bei der Alkoxylierung von Alkanolen wird im Allgemeinen eine Verteilung des Alkoxylierungsgrades erhalten, die in gewissem Umfang durch Einsatz unterschiedlicher Alkoxylierungskatalysatoren eingestellt werden kann. Durch die Auswahl geeigneter Mengen der Gruppen A und B kann das Eigenschaftsspektrum der erfindungsgemäßen Alkoxylat-Gemische je nach praktischen Erfordernissen angepasst werden.

Die Alkoxylat-Gemische werden durch Alkoxylierung der zugrunde liegenden Alkohole C₅H₁₁CH(C₃H₇)CH₂OH erhalten. Die Ausgangsalkohole können aus den einzelnen Komponenten gemischt werden, so dass sich das erfindungsgemäße Verhältnis ergibt. Sie können durch Aldolkondensation von Valeraldehyd und nachfolgende Hydrierung hergestellt werden. Die Herstellung von Valeraldehyd und den entsprechenden Isomeren erfolgt durch Hydroformylierung von Buten, wie beispielsweise in US 4,287,370; Beilstein E IV 1, 32 68, Ullmanns Encyclopedia of Industrial Chemistry, 5. Auflage, Band A1, Seiten 323 und 328 f beschrieben. Die nachfolgende Aldolkondensation ist beispielsweise beschrieben in US 5,434,313 und Römpp, Chemie Lexikon, 9. Auflage, Stichwort "Aldol-Addition" Seite 91. Die Hydrierung des Aldolkondensationsproduktes folgt allgemeinen Hydrierbedingungen.

Des Weiteren kann 2-Propylheptanol durch Kondensation von 1-Pentanol (als Mischung der entsprechenden Methylbutanole-1) in Gegenwart von KOH bei erhöhten Temperaturen hergestellt werden, siehe z.B. Marcel Guerbet, C.R. Acad Sci Paris 128, 511, 1002 (1899). Des Weiteren ist auf Römpp, Chemie Lexikon, 9. Auflage, Georg Thieme Verlag Stuttgart, und die dort genannten Zitate sowie Tetrahedron, Vol. 23, Seiten 1723 bis 1733, hinzuweisen.

In der allgemeinen Formel (III) kann der Rest C₅H₁₁ die Bedeutung n-C₅H₁₁, C₂H₅CH(CH₃)CH₂ oder CH₃CH(CH₃)CH₂CH₂ haben. Es handelt sich bei den Alkoxylaten um Gemische, wobei
- 70 bis 99 Gew.-%, vorzugsweise 85 bis 96 Gew.% Alkoxylate A1 vorliegen, in denen C₅H₁₁ die Bedeutung n-C₅H₁₁ hat, und
- 1 bis 30 Gew.-%, vorzugsweise 4 bis 15 Gew.% Alkoxylate A2, in denen C₅H₁₁ die Bedeutung C₂H₅CH(CH₃)CH₂ und/oder CH₃CH(CH₃)CH₂CH₂ hat.

Der Rest C₃H₇ hat vorzugsweise die Bedeutung n-C₃H₇.

Vorzugsweise wird die Alkoxylierung durch starke Basen katalysiert, die zweckmäßigerweise in Form eines Alkalialkoholats, Alkalihydroxids oder Erdalkalihydroxids, in der Regel in einer Menge von 0,1 bis 1 Gew.% bezogen auf die Menge des Alkanols R²-OH, zugesetzt werden, (vergl. G. Gee et al., J. Chem. Soc. (1961), S. 1345; B. Wojtech, Makromol. Chem. 66, (1966), S. 180).

Auch eine saure Katalyse der Additionsreaktion ist möglich. Neben Bronstedsäuren eignen sich auch Lewissäuren wie zum Beispiel AlCl₃ oder BF₃-Dietherat, BF₃, BF₃ · H₃PO₄, SbCl₄ · 2 H₂O, Hydrotalcit (Vgl. P.H. Plesch, The Chemistry of Cationic Polymerization, Pergamon Press, New York (1963). Geeignet als Katalysator sind auch Doppelmetallcyanid (DMC) Verbindungen.

Als DMC-Verbindung können prinzipiell alle dem Fachmann bekannten geeigneten Verbindungen verwendet werden.

Als Katalysator geeignete DMC-Verbindungen sind beispielsweise in der WO 99/16775 und der DE-A-101 17 273 beschrieben. Insbesondere sind für die Alkoxylierung Doppelmetallcyanid-Verbindung der allgemeinen Formel (IV) als Katalysator geeignet:

M¹a[M²(CN)_{b}(A)_{c}]_{d} · fM¹gXₙ · h(H₂O) · eL kP (IV),

in der
- M¹ mindestens ein Metallion, ausgewählt aus der Gruppe bestehend aus Zn²⁺, Fe²⁺, Fe³⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, Hg²⁺, Pd²⁺, Pt²⁺, V²⁺, Mg²⁺, Ca²⁺, Ba²⁺, Cu²⁺, La³⁺, Ce³⁺, Ce⁴⁺, Eu³⁺, Ti³⁺, Ti⁴⁺, Ag⁺, Rh²⁺, Rh³⁺, Ru²⁺, Ru³⁺ ist,
- M² mindestens ein Metallion, ausgewählt aus der Gruppe bestehend aus Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺ ist,
- A und X unabhängig voneinander ein Anion, ausgewählt aus der Gruppe, bestehend aus Halogenid, Hydroxid, Sulfat, Carbonat, Cyanid, Thiocyanat, Isocyanat, Cyanat, Carboxylat, Oxalat, Nitrat, Nitrosyl, Hydrogensulfat, Phosphat, Dihydrogenphosphat, Hydrogenphosphat oder Hydrogencarbonat sind,
- L ein mit Wasser mischbarer Ligand ist, ausgewählt aus der Gruppe, bestehend aus Alkoholen, Aldehyden, Ketonen, Ethern, Polyethern, Estern, Polyestern, Polycarbonat, Harnstoffen, Amiden, primären, sekundären und tertiären Aminen, Liganden mit Pyridin-Stickstoff, Nitrilen, Sulfiden, Phosphiden, Phosphiten, Phosphanen, Phosphonaten und Phosphaten,
- k eine gebrochene oder ganze Zahl größer oder gleich Null ist, und
- P ein organischer Zusatzstoff ist,
- a, b, c, d, g und n so ausgewählt sind, dass die Elektroneutralität der Verbindung (I) gewährleistet ist, wobei c = 0 sein kann,
- e die Anzahl der Ligandenmoleküle eine gebrochene oder ganze Zahl größer 0 oder 0 ist,
- f und h unabhängig voneinander eine gebrochene oder ganze Zahl größer 0 oder 0 sind.

Als organische Zusatzstoffe P sind zu nennen: Polyether, Polyester, Polycarbonate, Polyalkylenglykolsorbitanester, Polyakylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetate, ionische oberflächen- und grenzflächenaktive Verbindungen, Gallensäure oder deren Salze, Ester oder Amide, Carbonsäureester mehrwertiger Alkohole und Glycoside.

Diese Katalysatoren können kristallin oder amorph sein. Für den Fall, dass k gleich null ist, sind kristalline Doppelmetallcyanid-Verbindungen bevorzugt. Im Fall, dass k größer null ist, sind sowohl kristalline, teilkristalline, als auch substantiell amorphe Katalysatoren bevorzugt.

Von den modifizierten Katalysatoren gibt es verschiedene bevorzugte Ausführungsformen. Eine bevorzugte Ausführungsform sind Katalysatoren der Formel (IV), bei denen k größer null ist. Der bevorzugte Katalysator enthält dann mindestens eine Doppelmetallcyanid-Verbindung, mindestens einen organischen Liganden und mindestens einen organischen Zusatzstoff P.

Bei einer anderen bevorzugten Ausführungsform ist k gleich null, optional ist e auch gleich null und X ist ausschließlich ein Carboxylat, bevorzugt Formiat, Acetat und Propionat. Derartige Katalysatoren sind in der WO 99/16775 beschrieben. Bei dieser Ausführungsform sind kristalline Doppelmetallcyanid-Katalysatoren bevorzugt. Ferner bevorzugt sind Doppelmetallcyanid-Katalysatoren, wie in der WO 00/74845 beschrieben, die kristallin und plättchenförmig sind.

Die Herstellung der modifizierten Katalysatoren erfolgt durch Vereinigung einer Metallsalz-Lösung mit einer Cyanometallat-Lösung, die optional sowohl einen organischen Liganden L als auch einen organischen Zusatzstoff P enthalten können. Anschließend werden der organische Ligand und optional der organische Zusatzstoff zugegeben. Bei einer bevorzugten Ausführungsform der Katalysatorherstellung wird zunächst eine inaktive Doppelmetallcyanid-Phase hergestellt und diese anschließend durch Umkristallisation in eine aktive Doppelmetallcyanidphase überführt, wie in der PCT/EP01/01893 beschrieben.

Bei einer anderen bevorzugten Ausführungsform der Katalysatoren sind f, e und k ungleich Null. Dabei handelt es sich um Doppelmetallcyanid-Katalysatoren, die einen mit Wasser mischbaren organischen Ligand (im Allgemeinen in Mengen von 0,5 bis 30 Gew.%) und einen organischen Zusatzstoff (im allgemeinen in Mengen von 5 bis 80 Gew.%) enthalten wie in der WO 98/06312 beschrieben. Die Katalysatoren können entweder unter starkem Rühren (24000U/Min mit Turrax) oder unter Rühren hergestellt werden wie in der US 5,158,922 beschrieben.

Insbesondere als Katalysator geeignet sind für die Alkoxylierung Doppelmetallcyanid-Verbindungen, die Zink, Kobalt oder Eisen oder zwei davon enthalten. Besonders geeignet ist beispielsweise Berliner Blau.

Bevorzugt werden kristalline DMC-Verbindungen eingesetzt. In einer bevorzugten Ausführungsform wird eine kristalline DMC-Verbindung vom Zn-Co-Typ als Katalysator verwendet, der als weitere Metallsalzkomponente Zinkacetat enthält. Derartige Verbindungen kristallisieren in monokliner Struktur und weisen einen plättchenförmigen Habitus auf. Derartige Verbindungen werden beispielsweise in der WO 00/74845 oder der PCT/EP01/01893 beschrieben.

Als Katalysator geeignete DMC-Verbindungen können prinzipiell auf alle dem Fachmann bekannten Arten hergestellt werden. Beispielsweise können die DMC-Verbindungen durch direkte Fällung, "incipient wetness"-Methode, durch Herstellung einer Precursor-Phase und anschließende Umkristallisation hergestellt werden.

Die DMC-Verbindungen können als Pulver, Paste oder Suspension eingesetzt werden oder zu einem Formkörper verformt werden, in Formkörpern, Schäume oder ähnliches eingebracht werden oder auf Formkörper, Schäume oder ähnliches aufgebracht werden.

Die zur Alkoxylierung eingesetzte Katalysator-Konzentration, bezogen auf das Endmengengerüst ist typischerweise kleiner als 2000 ppm (d.h. mg Katalysator pro kg Produkt), bevorzugt kleiner als 1000 ppm, insbesondere kleiner als 500 ppm, besonders bevorzugt kleiner als 100 ppm, beispielsweise kleiner als 50 ppm oder 35 ppm, insbesondere bevorzugt kleiner als 25 ppm.

Die Additionsreaktion wird bei Temperaturen von 90 bis 240°C, vorzugsweise von 120 bis 180°C, im geschlossenen Gefäß ausgeführt. Das Alkylenoxid oder die Mischung verschiedener Alkylenoxide wird der Mischung aus erfindungsgemäßen Alkanolgemisch und Alkali unter dem bei der gewählten Reaktionstemperatur herrschenden Dampfdruck des Alkylenoxidgemisches zugeführt. Gewünschtenfalls kann das Alkylenoxid mit bis zu etwa 30 bis 60 % mit einem Inertgas verdünnt werden. Dadurch wird eine zusätzliche Sicherheit gegen explosionsartige Polyaddition des Alkylenoxids gegeben.

Wird ein Alkylenoxidgemisch eingesetzt, so werden Polyetherketten gebildet, in denen die verschiedenen Alkylenoxidbausteine praktisch statistisch verteilt sind. Variationen in der Verteilung der Bausteine längs der Polyetherkette ergeben sich aufgrund unterschiedlicher Reaktionsgeschwindigkeiten der Komponenten und können auch willkürlich durch kontinuierliche Zufuhr einer Alkylenoxidmischung programmgesteuerter Zusammensetzung erreicht werden. Werden die verschiedenen Alkylenoxide nacheinander zur Reaktion gebracht, so erhält man Polyethericetten mit blockartiger Verteilung der Alkylenoxid-Bausteine.

Die Länge der Polyetherketten schwankt innerhalb des Reaktionsprodukts statistisch um einen Mittelwert, der im Wesentlichen sich aus der Zusatzmenge ergebenden stöchiometrischen Wert.

Bevorzugte Alkoxylat-Gemische der allgemeinen Formel (I) können erhalten werden durch Umsetzung von Alkoholen der allgemeinen Formel C₅H₁₁CH(C₃H₇)CH₂OH mit Propylenoxid/Ethylenoxid in der vorstehend angegebenen Reihenfolge unter Alkoxylierungsbedingungen. Geeignete Alkoxylierungsbedingungen sind vorstehend und in Nikolaus Schönfeldt, Grenzflächenaktive Äthylenoxid-Addukte, Wissenschaftliche Verlagsgesellschaft mbH Stuttgart 1984 beschrieben. In der Regel wird die Alkoxylierung in Gegenwart basischer Katalysatoren wie KOH in Substanz durchgeführt. Die Alkoxylierung kann jedoch auch unter Mitverwendung eines Lösungsmittels durchgeführt werden. Dabei wird eine Polymerisation des Alkylenoxids in Gang gesetzt, bei der es zwangsläufig zu einer statistischen Verteilung von Homologen kommt, deren Mittelwert vorliegend mit p, n, m und q angegeben wird.

Bei einer bevorzugt zunächst durchgeführten Propoxylierung und erst nachfolgenden Ethoxylierung kann der Gehalt an Restalkohol in den Alkoxylaten vermindert werden, da Propylenoxid gleichmäßiger an die Alkoholkomponente addiert wird. Im Unterschied dazu reagiert Ethylenoxid vorzugsweise mit Ethoxylaten, so dass bei einer anfänglichen Verwendung von Ethylenoxid zur Umsetzung mit den Alkanolen eine breitere Homologenverteilung resultieren kann. Die erfindungsgemäß eingesetzten AlkoholGemische haben in der Regel einen Eigengeruch, der durch die vollständige Alkoxylierung weitestgehend unterdrückt werden kann.

Ferner kann es sich auch um blockförmige iso-Tridecanolalkoxylate der allgemeinen Formel (V) handeln

R-O-(CₘH₂ₘO)ₓ-(CₙH₂ₙO)_{y}-H (V)

in der
R einen iso-Tridecylrest bezeichnet,
m für die Zahl 2 und gleichzeitig n für die Zahl 3 oder 4 steht oder
m für die Zahl 3 oder 4 und gleichzeitig n für die Zahl 2 steht und
x und y unabhängig voneinander Zahlen von 1 bis 20 bedeuten,
wobei im Fall m = 2/n = 3 oder 4 die Variable x größer oder gleich y ist.

Diese blockförmigen iso-Tridecanolalkoxylate sind beispielsweise in der DE 196 21 843 A1 beschrieben, deren gesamter diesbezüglicher Offenbarungsgehalt in die vorliegende Erfindung durch Bezugnahme eingeschlossen wird.

Das als Alkoholkomponente zugrunde liegende iso-Tridecanol (Isotridecylalkohol) ist synthetischen Ursprungs und wird durch Oligomerisierung geeigneter niederer Olefinbausteine und anschliessende Oxosynthese (Hydroformylierung) hergestellt. So kann man Isobutylen, 1-Butylen, 2-Butylen oder Gemische hieraus katalytisch trimerisieren, Propylen katalytisch tetramerisieren oder 2-Methyl-1-penten katalytisch dimerisieren. Die so erhältlichen C₁₂-Olefine werden dann zum homologen C₁₃-Alkohol, beispielsweise mittels CO und H₂ an einem geeigneten Katalysator, umgesetzt.

Die Hauptmenge des iso-Tridecanols besteht aus primären C₁₃-Alkanolen mit mindestens 3, insbesondere 4 Verzweigungen (Alkylseitenketten). In der Regel handelt es sich um Tetramethylnonanole, z. B. 2,4,6,8-Tetramethyl-1-nonanol oder 3,4,6,8-Tetramethyl-1-nonanol. Auch Ethyldimethylnonanole wie 5-Ethyl-4,7-dimethyl-1-nonanol können vorliegen.

Als zugrundeliegende Alkoholkomponente kommen jedoch nicht nur reines iso-Tridecanol sondern auch Homologenmischungen aus verzweigten C₁₁- bis C₁₄-Alkanolen, welche iso-Tridecanol als Hauptkomponente enthalten, in Betracht. Solche Homologenmischungen entstehen unter bestimmten Bedingungen bei der oben geschilderten Oligomerisierung niederer Olefinbausteine und anschliessenden Oxosynthese. Eine typische Zusammensetzung einer solche Mischung ist die folgende:
- verzweigtes C₁₁-Alkanol (iso-Undecanol) 2-15 Gew.-%,
- verzweigtes C₁₂-Alkanol (iso-Dodecanol) 15-35 Gew.-%,
- iso-Tridecanol 55-75 Gew.-% und
- verzweigtes C₁₄-Alkanol (iso-Tetradecanol) 1-10 Gew.-%.

Von dem in der vorliegenden Erfindung verwendeten iso-Tridecanol sind die "C₁₃/C₁₅-Oxoalkohole" abzugrenzen, welche Gemische aus entsprechenden linearen Olefinen, also alpha -Dodecen und alpha -Tetradecen, die hydroformyliert worden sind, darstellen. Die erhaltenen C₁₃- und C₁₅-Alkanole sind linear oder weisen maximal eine Verzweigung auf.

Die Alkoxylierungsgrade x und y, welche in der Regel Durchschnittswerte darstellen, da meist eine statistische Verteilung der Alkylenoxid-Einheiten mit einem Häufigkeitsmaximum vorliegt, bedeuten vorzugsweise unabhängig voneinander Zahlen von 1,5 bis 12. Durch spezielle Alkoxylierungskatalysatoren, z. B. modifizierte Bentonite oder Hydrotalkite, wie sie in der WO-A 95/04024 beschrieben sind, kann die statistische Verteil lung stark eingeengt werden, so dass man "narrow range-Alkoxylate" erhält.

Die beschriebenen blockförmigen iso-Tridecanolalkoxylate (V) sind entweder Ethylenoxid-Propylenoxid bzw. Butylenoxid-Addukte der Formel (Va)

R-O-(C₂H₄O)ₓ-(CₙH₂ₙO)_{y}-H (Va)

mit n = 3 oder 4 (Va) oder Propylenoxid bzw. Butylenoxid-Ethylenoxid-Addukte der Formel (Vb)

R-O-(C₁₁H₂ₘO)ₓ-(C₂H₄O)_{y}-H (Vb)

mit m = 3 oder 4 (Vb).

Steht m oder n für die Zahl 3 oder 4, wird die Zahl 3 (Propylenoxid-Block) bevorzugt.

Das Verhältnis der Variablen x und y, welches mit für die Balance zwischen hydrophilen und hydrophoben Molekül teilen ausschlaggebend ist, ist bei den Addukten (Va) größer oder gleich 1, vorzugsweise beträgt das Verhältnis von x zu y 1 : 1 bis 4 : 1, insbesondere 1,5: 1 bis 3 : 1.

Das Verhältnis der Variablen x und y ist bei den Addukten (Vb) etwas weniger kritisch und beträgt in der Regel 1 : 3 bis 3 : 1, vorzugsweise 1 : 1,5 bis 3 : 1.

Eine andere geeignete Niotensidklasse sind endgruppenverschlossene Alkoholalkoxylate, insbesondere von zuvor genannten Alkoholalkoxylaten. In einer besonderen Ausführungsform handelt es sich um die entsprechenden endgruppenverschlossenen Alkoholalkoxylate der Alkoholalkoxylate der allgemeinen Formeln (I), (II), (III) und (V). Der Endgruppenverschluss kann beispielsweise durch Dialkylsulfat, C₁₋₁₀-Alkylhalogenide, Phenylhalogenide, vorzugsweise -chloride, -bromide, besonders bevorzugt Cyclohexylchlorid, Cyclohexylbromid, Phenylchlorid oder Phenylbromid erfolgen.

Beispiele für endgruppenverschlossene Alkoxylate sind auch in der DE-OS 37 26 121 beschrieben, deren gesamte diesbezügliche Offenbarung in die vorliegende Erfindung durch Bezugnahme eingeschlossen wird. In einer bevorzugten Ausführungsform weisen diese Alkoholalkoxylate die allgemeine Struktur (VI) auf,

R¹-O-(CH₂-CHR^{II}-O)_{m'}(CH₂-CHR^{III}O)_{n'}R^{IV} (VI)

auf, in der
- R¹: Wasserstoff oder C₁-C₂₀-Alkyl,
- R^{II} und R^{III}: gleich oder verschieden sind und jeweils unabhängig voneinander Wasser- stoff, Methyl oder Ethyl,
- R^{IV}: C₁C₁₀-Alkyl, vorzugsweise C₁-C₄-Alkyl, oder Cyclohexyl- oder Phenyl-,
m' und n' gleich oder verschieden und größer oder gleich 0 sind, mit der Maßgabe, dass die Summe von m' und n' 3 bis 300 beträgt.

Diese Verbindungen werden durch Umsetzung von Polyoxyalkylenverbindungen der Formel (VII)

R^{V}-O(CH₂CHR^{II}-O)ₘ·(CH₂-CHR^{III}-O) ₙ·H (VII)

in der P^{V} Wasserstoff oder C₁-C₂₀-Alkyl bedeutet und R^{II}, R^{III}, m' und n' jeweils die oben genannte Bedeutung besitzen, mit einem Dialkylsulfat der Formel (VIII)
(R^{IV}O)₂SO₂ (VIII) oder einem C₁-C₁₀-Alkyl-, insbesondere C₁-C₄-Alkylhalogenid, vorzugsweise -chlorid oder -bromid, Cyclohexyl- oder Phenylhalogenid, vorzugsweise -chlorid oder -bromid,
in der R^{IV} die oben genannte Bedeutung besitzt, in Gegenwart von Alkalihydroxid hergestellt. Die Umsetzung wird bei einer Temperatur von 20 bis 60°C in Gegenwart einer wässrigen Lösung eines Alkalihydroxids vorgenommen, wobei die Konzentration an Alkalihydroxid während der gesamten Dauer der Umsetzung nicht kleiner als 35 Gew.-%, bezogen auf die wässrige Phase sein darf, und man je Moläquivalent organischer Hydroxygruppen mindestens 1 Mol Dialkylsulfat der Formel (VIII) und mindestens ein Mol Alkalihydroxid verwendet. Alle in den oben genannten Formeln (VI), (VII) und (VIII) auftretenden Alkylgruppen können sowohl geradkettig als auch verzweigt sein. R¹, R^{IV} und R^{V} sind beispielsweise Methyl, Ethyl, Propyl, Isopropyl, Butyl, Isobutyl oder sec-Butyl.

R^{I} und R^{V} sind weiterhin beispielsweise Pentyl, Isopentyl, sec-Pentyl, tert.-Pentyl, Hexyl, 2-Methylpentyl, Heptyl, Octyl, 2-Ethylhexyl, Osooctyl, Nonyl, Isononyl, Decyl, Isodecyl, Undecyl, Dodecyl, Tridecyl, 3,5,5,7-Tetramethylnonyl, Isotridecyl, Tetradecyl, Pentadecyl, Hexadecyl, Heptadecyl, Octadecyl, Nonadecyl oder Eicosyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullmann, Enzyklopädie der Technischen Chemie, 4. Auflage, Band 7, Seiten 215 bis 217, sowie Band 11, Seiten 435 und 436).

Bevorzugt verwendet man als Ausgangsprodukte Polyoxyalkylenderivate der Formel (VI), in der R^{V} Wasserstoff oder C₈-C₁₆-Alkyl bedeutet.

Weiterhin bevorzugte Polyoyalkylenderivate der Formel (VII) sind solche, bei denen die Summe von m' und n' 3 bis 10 oder 50 bis 100 beträgt.

Als Alkylierungsmittel ist ein Dialkylsulfat der Formel (VIII) bevorzugt, in der R^{IV} Ethyl oder insbesondere Methyl bedeutet.

Wenn man solche Polyoxyalkylenderivate der Formel (VII), in der R^{V} Wasserstoff bedeutet, als Ausgangsprodukte verwendet, erfolgt eine zweifache Veretherung. In diesem Falle gelangt man zu veretherten Polyoxyalkylenderivaten der Formel (VI), in der R^{I} identisch ist mit R^{IV}.

Die Konzentration an nichtionischem Tensid in der erfindungsgemäßen Zusammensetzung kann in Abhängigkeit der Laugereibedingungen, insbesondere in Abhängigkeit des zu laugenden Materials, variieren. Das nichtionische Tensid ist vorzugsweise in einer Konzentration in der wässrigen cyanidhaltigen Zusammensetzung löslich, die es ermöglicht, den Extraktionsgehalt an Gold bzw. Silber signifikant zu erhöhen, die Laugungsdauer signifikant zu erniedrigen oder die erforderliche Menge an Cyanidsalzen in der Lauge signifikant zu erniedrigen. Daher beträgt die Konzentration des nichtionischen Tensids in der erfindungsgemäßen Zusammensetzung vorzugsweise 0,01 bis 0,1 Gew.-%, besonders bevorzugt 0,02 bis 0,09 Gew.-%, insbesondere 0,025 bis 0,75 Gew.%, speziell 0,03 bis 0,07 Gew.-%.

Es sei ausdrücklich darauf verwiesen, dass die erfindungsgemäßen Zusammensetzungen während des Extraktionsverfahrens in unterschiedlichen Konzentrationsbereichen appliziert werden kann (Gradientenfahrweise). Darüber hinaus können die oberflächenaktiven Stoffe (als Teil der Zusammensetzung) teilweise oder ganz auch schon vor Beginn des Extraktionsverfahrens dem Ausgangsmaterial bzw. Gestein, z. B. beim Mahlen des Materials, zugesetzt werden.

Die Aufwandmenge an nichtionischem Tensid beträgt erfahrungsgemäß pro Tonne Ausgangsmaterial 1 bis 30 ppm, vorzugsweise 1 bis 20 ppm, besonders bevorzugt 2 bis 15 ppm, insbesondere 3 bis 10 ppm. Es hat sich dabei als günstig erwiesen, zu Beginn des Extraktionsverfahrens eine höhere Konzentration einzusetzen als gegen Ende der Auslaugung.

Darüber hinaus kann die erfindungsgemäße Zusammensetzung zusätzlich mindestens ein anionisches Tensid ("Aniontensid") und/oder mindestens ein kationisches Tensid und/oder mindestens ein amphoteres Tensid umfassen.

In einer bevorzugten Ausführungsform ist das mindestens eine anionische Tensid ausgewählt aus der Gruppe, bestehend aus Fettalkoholsulfaten, sulfatierte alkoxylierte Alkoholen, Alkansulfonaten, N-Acylsarkosinaten, Alkylbenzolsulfonaten, Olefinsulfonaten und -disulfonaten, Alkylestersulfonaten, sulfonierten Polycarbonsäuren, Alkylglycerinsulfonaten, Fettsäureglycerinestersulfonaten, Alkylphenolpolyglykolethersulfaten, Paraffinsulfonaten, Alkylphosphaten, Acylisothionaten, Acyltauraten, Acylmethyltauraten, Alkylbernsteinsäuren, Alkenylbernsteinsäuren oder deren Halbster oder Halbamide, Alkylsulfonbernsteinsäuren oder deren Amide, Mono- und Diester von Sulfonbemsteinsäuren, sulfatierte Alkylpolyglycosiden, Alkylpolyglykolcarboxylaten und Hydroxyalkylsarkosinaten.

Geeignete anionische Tenside sind Fettalkoholsulfate von Fettalkoholen mit beispielsweise 8 bis 22, vorzugsweise 10 bis 18 Kohlenstoffatomen, C₁₂-C₁₈-Alkoholsulfate, Laurylsulfat, Cetylsulfat, Myristylsulfat, Palmitylsulfat, Stearylsulfat und Talgfettalkoholsulfat.

Weitere geeignete anionische Tenside sind sulfatierte ethoxylierte C₈- bis C₂₂-Alkohole (Alkylethersulfate) bzw. deren lösliche Salze. Verbindungen dieser Art werden beispielsweise dadurch hergestellt, dass man zunächst einen C₈- bis C₂₂-, vorzugsweise einen C₁₀- bis C₁₈-Alkohol z. B. einen Fettalkohol, alkoxyliert und das Alkoxylierungsprodukt anschließend sulfatiert. Für die Alkoxylierung verwendet man vorzugsweise Ethylenoxid, wobei man pro Mol Alkohol 1 bis 50, vorzugsweise 1 bis 20 Mol Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte C₈- bis C₂₂-Alkohole, die Ethylenoxid und Propylenoxid oder Ethylenoxid und Butylenoxid oder Ethylenoxid und Propylenoxid und Butylenoxid enthalten. Die alkoxylierten C₈- bis C₂₂-Alkohole können die Ethylenoxid-, Propylenoxid-und Butylenoxideinheiten in Form von Blöcken oder in statistischer Verteilung enthalten. Je nach Art des Alkoxylierungskatalysators kann man Alkylethersulfate mit breiter oder enger Alkylenoxid-Homologen-Verteilung erhalten.

Weitere geeignete anionische Tenside sind Alkansulfonate wie C₈- bis C₂₄-, vorzugsweise C₁₀- bis C₁₈-Alkansulfonate sowie Seifen wie beispielsweise die Na- und K-Salze von gesättigten und/oder ungesättigten C₈₋ bis C₂₄-Carbonsäuren.

Weitere geeignete anionische Tenside sind lineare C₈- bis C₂₀-Alkylbenzolsulfonate ("LAS"), vorzugsweise lineare C₉- bis C₁₃-Alkylbenzolsulfonate und -Alkyltoluolsulfonate.

Weiterhin eignen sich als anionische Tenside noch C₈- bis C₂₄-Olefinsulfonate und -disulfonate, welche auch Gemische aus Alken- und Hydroxyalkansulfonaten bzw. -disulfonate darstellen können, Alkylestersulfonate, sulfonierte Polycarbonsäuren, Alkylglycerinsulfonate, Fettsäureglycerinestersulfonate, Alkylphenolpoly-glykolethersulfate, Paraffinsulfonate mit ca. 20 bis ca. 50 C-Atomen (basierend auf aus natürlichen Quellen gewonnenem Paraffin oder Paraffingemischen), Alkylphosphate, Acylisethionate, Acyltaurate, Acylmethyltaurate, Alkylbernsteinsäuren, Alkenylbernsteinsäuren oder deren Halbester oder Halbamide, Alkylsulfobernsteinsäuren oder deren Amide, Mono- und Diester von Sulfobemsteinsäuren, Acylsarkosinate, sulfatierte Alkylpolyglucoside, Alkylpolyglykolcarboxylate sowie Hydroxyalkylsarkosinate. Die anionischen Tenside werden der erfindungsgemäßen Zusammensetzung vorzugsweise in Form von Salzen zugegeben. Geeignete Kationen in diesen Salzen sind Alkalimetallionen wie Natrium, Kalium und Lithium und Ammoniumsalze wie z. B. Hydroxyethylammonium-, Di(hydroxyethyl)ammonium- und Tri(hydroxyethyl)ammoniumsalze.

Man kann einzelne anionische Tenside oder eine Kombination unterschiedlicher Aniontenside einsetzen. Es können anionische Tenside aus nur einer Klasse zum Einsatz gelangen, beispielsweise nur Fettalkoholsulfate oder nur Alkylbenzolsulfonate, man kann aber auch Tensidmischungen aus verschiedenen Klassen verwenden, z. B. eine Mischung aus Fettalkoholsulfaten und Alkylbenzolsulfonaten.

Das anionische Tensid kann in der erfindungsgemäßen Zusammensetzung bis zu 99 %, vorzugsweise bis zu 60 %, besonders bevorzugt bis zu 30 %, insbesondere bis zu 10 %, des nichtionischen Tensids ersetzen.

Darüber hinaus kann die erfindungsgemäße Zusammensetzung ein kationisches Tensid enthalten, das ausgewählt ist aus der Gruppe, betstehend aus Tetraalkylammuniumsalze, Imidazoliniumsalze und Aminoxiden.

Ferner können kationische Tenside eingesetzt werden, wie sie in der WO 99/19435 beschrieben sind. Beispiele sind C₈-bis C₁₆-Dialkyldimethylammoniumsalze, Dialkoxydimethylammoniumsalze oder Imidazoliniumsalze mit langkettigem Alkylrest.

Das kationische Tensid kann in der erfindungsgemäßen Zusammensetzung bis zu 99 % vorzugsweise bis zu 60 %, besonders bevorzugt bis zu 30 %, insbesondere bis zu 10 %, des nichtionischen Tensids ersetzen.

Wenn in der erfindungsgemäßen Zusammensetzung ein amphoteres Tensid verwendet wird, so kann dieses ausgewählt sein aus der Gruppe der Tenside, enthaltend Carbonsäruen, vorzugsweise ethylnisch ungesättigte Carbonsäuren, sowie weiterhin mindestens eine ethylenisch ungesättigte Monomereinheit der allgemeinen Formel (IX)

R¹(R²)C=C(R³)R⁴ (IX),

in der R¹ bis R⁴ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert, eine heteroatomare Gruppe mit mindestens einer positiv geladenen Gruppe, einem quatemisierten Stickstoffatom oder zumindest einer Amingruppe mit einer postiven Ladung im pH-Bereich zwischen 2 und 11 oder für -COOH oder-COOR⁵ steht, wobei R⁵ ein gesättigter oder ungesättigter, geradkettigter oder verzweigter Kohlenwasserstoffrest mit 1 bis 12 Kohlenstoffatomen ist, enthält.

Beispiele für die vorgenannten Monomereinheiten der Fomel (I) sind Diallylamin, Methyldiallylamin, Tetramethylammoniumsalze, Acrylamidopropyl(trimethyl)ammoniumsalze (R¹, R² und R³ = H, R⁴ = C(O)NH(CH₂)₂N⁺ (CH3)₃X⁻), Methacrylamidopro-pyl(trimethyl)ammoniumsalze (R¹ und R² = H, R³ = CH₃, H, R⁴ = C(O)NH(CH₂)₂N⁺ (CH₃)₃X⁻).

Besonders bevorzugte amphotere Tenside enthalten als Monomereinheiten Derivate des Diallylamins, insbesondere Dimethyldiallylammoniumsalz und/oder Methacrylami-dopropyl(trimethyl)-ammoniumsalz, vorzugsweise in Form des Chlorids, Bromids, Iodids, Hydroxids, Phosphats, Sulfats, Hydrosulfats, Ethylsulfasts, Methylsulfats, Mesylats, Tosylats, Formiats oder Acetats in Kombination mit Monomereinheiten aus der Gruppe der ethylenisch ungesättigten Carbonsäuren.

Man kann einzelne amphotere Tenside oder eine Kombination unterschiedlicher amphoterer Tenside einsetzen. Es können amphotere Tenside aus nur einer Klasse zum Einsatz gelangen, man kann aber auch Tensidmischungen aus verschiedenen Klassen verwenden.

Das amphotere Tensid kann in der erfindungsgemäßen Zusammensetzung bis zu 99 %, vorzugsweise bis zu 60 %, besonders bevorzugt bis zu 30 %, insbesondere bis zu 10 %, des nichtionischen Tensids ersetzen.

Die erfindungsgemäße Zusammensetzung weist einen pH-Wert von vorzugsweise 8 bis 13, besonders bevorzugt 9 bis 12, insbesondere 9 bis 11, auf. Der Cyanidgehalt der erfindungsgemäßen Zusammensetzung beträgt vorzugsweise 100 bis 500 ppm, besonders bevorzugt 100 bis 400 ppm, insbesondere 100 bis 300 ppm.

Ferner ist es bevorzugt, wenn die erfindungsgemäße Zusammensetzung zusätzlich vorzugsweise 100 bis 500 ppm, besonders bevorzugt 100 bis 400 ppm, insbesondere 100 bis 200 ppm, Kalk enthält.

Darüber hinaus kann die erfindungsgemäße Zusammensetzung zusätzlich mindestens ein Flockungsmittel enthalten. Entsprechende Beispiele sind in "The Extractive Metallurgy of Gold in South Africa", The South African Institute of Mining and Metallurgy, Vol. 1, 1987, Seite 287 und 288 erwähnt, dessen gesamte Offenbarung durch Bezugnahme in die vorliegende Erfindung eingeschlossen wird. Geeignete Beispiele sind Polyacrylamide und Kalk.

Darüber hinaus kann die erfindungsgemäße Zusammensetzung zusätzlich mindestens ein Dispergiermittel, beispielsweise ausgewählt aus der Gruppe, bestehend aus Salzen von Naphthalinsulfonsäuren, Kondensationsprodukten aus Naphthalinsulfonsäuren und Formaldehyd sowie Polycarboxylaten, enthalten. Entsprechende Dispergiermittel sind beispielsweise unter den Handelsnamen Tamol^{®}, Sokalan^{®} und Nekal^{®} von der BASF AG sowie unter dem Handelsnamen Solsperse^{®} von Lubrizol kommerziell erhältlich.

Diese Dispergiermittel können gegebenenfalls auch als Scaleinhibitoren (Belagsverhinderer) wirken, da diese das sich im alkalischen Medium bildende Calciumcarbonat CaCO₃ dispergieren und so beispielsweise ein Verstopfen von Düsen oder eine Belagsbildung in Rohrleitungen verhindern. Unabhängig hiervon kann die erfindungsgemäße Zusammensetzung zusätzlich mindestens einen weiteren Scaleinhibitor enthalten. Geeignete Scaleinhibitoren sind beispielsweise in der WO 04/099092 beschrieben, welche (Meth)acrylsäurecopolymere beschreibt, die
(a) 50 bis 80 Gew.%, vorzugsweise 50 bis 75 Gew.%, besonders bevorzugt 55 bis 70 Gew.-%, eines Poly(meth)acrylsäure-Grundgerüsts,
(b) 1 bis 40 Gew.%, vorzugsweise 5 bis 20 Gew.-%, besonders bevorzugt 7 bis 15 Gew.%, mindestens einer an das Grundgerüst gebundenen und/oder in das Grundgerüst eingebundenen (bzw. eingebundener) Einheit ausgewählt aus der Gruppe, bestehend aus Isobuteneinheiten, Terelactoneinheiten und Isopropanoleinheiten und
(c) 5 bis 50 Gew.%, vorzugsweise 5 bis 40 Gew.%, besonders bevorzugt 10 bis 30 Gew.-%, Amideinheiten auf Basis von Aminoalkylsulfonsäuren umfassen,
wobei das Gesamtgewicht der Einheiten in dem (Meth)acrylsäurecopolymer 100 Gew.-% beträgt und alle Gewichtsangaben auf das (Meth)acrylsäurecopolymer bezogen sind.

Die gemäß WO 04/099092 vorgesehenen (Meth)acrylsäurecopolymere weisen vorzugsweise ein gewichtsmittleres Molekulargewicht des sulfongruppenhaltigen Polymers von 1.000 bis 20.000 g/mol auf und können vorzugsweise durch folgende Verfahrensschritte hergestellt werden:
(1) radikalische Polymerisation von (Meth)acrylsäure in Gegenwart von Isopropanol und gegebenenfalls Wasser, wobei ein Polymer I resultiert, und
(2) Amidierung des aus Verfahrensschritt (1) stammenden Polymers I durch Umsetzung mit mindestens einer Aminoalkansulfonsäure.

Als weitere geeignete Scaleinhibitoren sind beispielsweise zu nennen:
- Polycarbonsäurehalbamide, die durch Umsetzung von Anhydridgruppen enthaltenden Polymerisaten und Aminogruppen enthaltenden Verbindungen erhältlich sind (gemäß DE 195 48 318),
- Kieselsäure (gemäß EP 0 556 162),
- Vinylmilchsäure und/oder Isopropenylmilchsäure (gemäß DE 197 195 16),
- Homopolymerisaten der Acrylsäure (gemäß US-A-3 756 257),
- Copolymerisate aus Acrylsäure und/oder (Meth)acrylsäure und Vinylmilchsäure und/oder Isopropenylmilchsäure,
- Copolymerisate aus Styrol und Vinylmilchsäure,
- Copolymerisate aus Maleinsäure und Acrylsäure, Wasserlösliche oder wasserdispergierbare Pfropfpolymerisate, die durch radikalisch initiierte Pfropfpolymerisation
   (I) mindestens eines monoethylenisch ungesättigten Monomeren auf
   (II) Polymerisaten einer Molmasse von 200 bis 5000 von monoethylenisch ungesättigten Dicarbonsäuren oder ihren Anhydriden, wobei man auf 100 Gewichtsteile der Pfropfgrundlage (II) 5 bis 2000 Gewichtsteile (I) einsetzt (DE 195 03 546), erhältlich sind,
- gegebenenfalls hydrolysierte Polymaleinsäureanhydride und ihre Salze (gemäß US-A-3 810 834, GB-A-1 454 657 und EP-A-0 261 589),
- Iminodisuccinate (gemäß DE 101 02 209),
- Formulierungen, enthaltend Komplexbildner wie Ethylendiamintetraessigsäure (EDTA) und/oder Diethylentriaminpentaessigsäure (DTPA) (gemäß US 5,366,016),
- Phosphonate,
- Polyacrylate,
- Polyasparaginsäuren bzw. gemäß DE 44 34 463 modifizierte Polyasparaginsäuren,
- Polyasparaginsäureimide,
- Hydroxamsäure-, Hydroxamsäureether- und/oder Hydrazidgruppen enthaltende Polymere (gemäß DE 44 27 630),
- gegebenenfalls hydrolysierte Polymerisate des Maleinimids (gemäß DE 43 42 930),
- Naphtylaminpolycarboxylate (gemäß EP 0 538 969),
- Oxaalkanpolyphosphonsäuren (gemäß EP 330 075),
- Polyhydroxyalkan-amino-bis-methylenphosphonsäuren (gemäß DE 40 16 753) und
- oxidierte Polyglucosane (gemäß DE 43 30 339).

Die vorgenannten Druckschriften sind hinsichtlich der jeweiligen Scaleinhibitoren durch Bezugnahme in die vorliegende Erfindung eingeschlossen.

In einer besonderen Ausführungsform der vorliegenden Erfindung erfolgen im Anschluss an die Verfahrensschritte (a), (b) und (c) die folgenden Verfahrensschritte (d) und (e):
(d) Abtrennen des Metall-Komplexes aus der Zusammensetzung und
(e) Reduktion des komplexierten Metalls unter Erhalt des elementarem Metalls.

Das erfindungsgemäße Verfahren eignet sich grundsätzlich zur Gewinnung von jedem Metall aus einem das entsprechende Metall enthaltenden Ausgangsmaterial, solange das Metall mit dem Cyanid eine im Wesentlichen lösliche Verbindung eingeht und somit aus dem Ausgangsmaterial herausgelöst werden kann. In einer bevorzugten Ausführungsform der vorliegenden Erfindung eignet sich das Verfahren zur Gewinnung von Gold, Silber und/oder Platin. In einer besonders bevorzugten Ausführungsform eignet sich das erfindungsgemäße Verfahren zur Gewinnung von Gold und/oder Silber. Im Folgenden wird die Gewinnung der Edelmetalle Gold bzw. Silber näher beschrieben. Die Ausführungen gelten in ihrer Allgemeinheit auch für alle anderen Metalle, die mit dem erfindungsgemäßen Verfahren gewonnen werden können.

Das erfindungsgemäße Verfahren wird vorzugsweise so durchgeführt, dass das edelmetallhaltige Material aufgehäuft wird und dann von oben mit der erfindungsgemäßen Zusammensetzung besprüht wird. Die Besprühung des goldhaltigen Materials erfolgt dabei vorzugsweise tropfweise. Nach dem Abtrennen des Goldcyanid-Komplexes aus der Zusammensetzung kann diese für weitere Auslaugungsvorgänge erneut verwendet werden.

Als Oxidationsmittel werden in dem erfindungsgemäßen Verfahren beispielsweise Sauerstoff, z. B. in Form von Luftsauerstoff, Wasserstoffperoxid und andere geeignete Oxidationsmittel verwendet.

Als goldhaltiges Material wird vorzugsweise ein Gemenge, das neben anderen Metallen oder Metallverbindungen Gold in metallischer Form enthält, verwendet.

In einer bevorzugten Ausführungsform des erfindungsgemäßen Verfahrens umfasst das goldhaltige Material metallisches Gold, gegebenenfalls in Legierung mit Silber und/oder anderen Edelmetallen und/oder verunreinigt mit Beimengungen anderer Metalle und/oder vergesellschaftet mit Metallerzen.

Bei dem goldhaltigen Material handelt es sich beispielsweise um gediegene oder gebundene Vorkommen, beispielsweise Erze.

Das goldhaltige Material ist vorzugsweise ausgewählt aus der Gruppe, bestehend goldhaltigem Quarz, goldhaltigem Pyrit, Schrifterz (Sylvanit, AuAgTe₄), Blättererz (Nagyagit, (Pb, Au) (S, Te, Sb)₁₋₂) und Calvait (Krennerit, AuTe₂).

In einer weiteren Ausführungsform der vorliegende Erfindung ist das goldhaltige Material Elektronikschrott.

Der Elektronikschrott kann beispielsweise von Leiterplatten elektronischer Baugruppen, zerkleinerten Halbleiterbausteinen wie z. B. integrierten Schaltkreisen, aus den Rückständen von Trockenbatterien nach deren pyrolytischen Behandlungen oder aus den über mechanische Elektronikschrott-Recycelprozessen verbleibenden Reststoffen stammen.

Als silberhaltige Materialien können beispielsweise sulfidische Silbererze wie *Silberglanz (Argentit)* Ag₂S, *Kupfersilberglanz (Stromeyerit)* CuAgS (= "CuS · Ag₂S") sowie Silberdoppelsulfide mit Arsen- und Antimonsulfid, z. B. *Fahlerz* (Cu, Ag)₃(Sb, As)S₃ (= "3(Cu, Ag)₂S · (Sb, As)₂S3"), *Proustit (lichtes Rotgültigerz)* Ag₃AsS₃ (="3Ag₂S · As₂S₃") *Pyrargyrit (dunkles Rotgültigerz)* Ag₃SbS₃ (= "3Ag₂S · Sb₂S₃") *Silberantimonglanz (Margyrit)* AgSbS₂ (= "Ag₂S · Sb₂S₃") und *Homsilber AgCl* (*Chlorargy*rit) bzw. AgBr *(Bromargyrit)* verwendet werden.

Es ist bevorzugt, wenn das zu extrahierende metallhaltige Material eine spezifische Größe aufweist. Sind die einzelnen zu extrahierenden Materialteilchen zu groß, ist die Ausbeute an ausgelaugtem Metall zu gering. Andererseits führt eine zu geringe Teilchengröße zu sehr niedrigen Flussraten der erfindungsgemäßen Zusammensetzung durch das metallhaltige Material. Daher wird das metallhaltige Material im Allgemeinen vor dem Laugungsprozess einem oder mehreren Mahlschritten unterzogen. Falls ein oder mehrere Mahlschritte durchgeführt werden, so können diese vorzugsweise in Gegenwart des erfindungsgemäß vorgesehenen nichtionischen Tensids, beispielsweise in Form einer wässrigen Lösung, durchgeführt werden. Gegebenenfalls kann dann auf den Zusatz des nichtionischen Tensids in der eigentlichen Cyanidlaugerei verzichtet werden.

Gegebenenfalls ist es - je nach Art des metallhaltigen Materials, insbesondere bei der Gold- und Silbergewinnung, speziell bei der Goldgewinnung - vorteilhaft, wenn das gemahlene Material vor der eigentlichen Cyanidlaugerei einem Agglomeritionsschritt unterzogen wird. Falls ein Agglomerationsschritt durchlaufen wird, so kann dieser vorzugsweise in Gegenwart des erfindungsgemäß vorgesehenen nichtionischen Tensids, beispielsweise in Form einer wässrigen Lösung, durchgeführt werden. Gegebenenfalls kann dann auf den Zusatz des nichtionischen Tensids in der eigentlichen Cyanidlaugerei verzichtet werden. Durch die Tensidzugabe während der Agglomeration kann eine im Wesentlichen vollständige Benetzung des metallhaltigen Materials mit einer cyanidhaltigen wässrigen Lösung gewährleistet werden. Das Agglomerisierungsmihel wird im Allgemeinen durch mechanisches Mischen von 2 bis 10 kg Kalk oder Zement, besonders bevorzugt Portlandzement, pro Tonne zu agglomerierendes metallhaltiges Material mit 8 bis 16 % einer wässrigen, gegebenenfalls cyanidhaltigen Lösung, vorzugsweise unter Zusatz des erfindungsgemäß vorgesehenen nichtionischen Tensids hergestellt.

In einer weiteren Ausführungsform der vorliegenden Erfindung ist es auch möglich, das erfindungsgemäß vorgesehene nichtionische Tensid selbständig von einer wässrigen cyanidhaltigen Lösung, beispielsweise als eigene wässrige Lösung, auf das zu laugende Material aufzubringen. Dieses kann vorzugsweise unmittelbar vor, nach oder während der Auftragung der wässrigen cyanidhaltigen Lösung erfolgen. Dabei ist es in Abhängigkeit des auszulaugenden Materials gegebenenfalls ausreichend, wenn das erfindungsgemäß vorgesehene nichtionische Tensid nur in den ersten Durchgängen der Cyanidlaugerei, beispielsweise für ein oder zwei Tage, verwendet wird, während im Anschluss daran entweder graduell weniger Tensid verwendet werden kann (Gradientenfahrweise) oder aber auf den Tensidzusatz verzichtet werden kann.

Die Aufarbeitung der so erhaltenen metallhaltigen Cyanidkomplex-Lösungen erfolgt auf dem Fachmann bekannte Art, beispielsweise durch Adsorption an Aktivkohle bzw. Ionenaustauschern sowie Reduktion durch Zinkzugabe oder auf elektrochemischem Weg.

Die vorliegende Erfindung wird durch die nachfolgenden Beispiele erläutert.

### Kontaktwinkelbestimmung

Die Kontaktwinkel wurden mit einem videogestützten Hochgeschwindigkeits-Kontaktwinkelmeßgeräts des Typs OCAH 200 der Firma Dataphysics Instruments GmbH, Raiffeisenstraße 34, Filderstadt, auf einem extra-weißen Glasträger der Fa. Gerhard Menzel Glasbearbeitungswerk GmbH & Co.Kg, Braunschweig, bestimmt. Die in Tabelle 1 aufgeführten erfindungsgemäßen Tenside bzw. Tensidkombinationen wurden in der in Tabelle 2 angegebenen Konzentration (Gew.%) in einer mit NaOH auf pH 10 eingestellten wässrigen Lösung eingesetzt. Der Kontaktwinkel wurde bei 23°C eine Sekunde nach Aufgabe bestimmt. Der Kontaktwinkel der Natronlauge vom pH 10 ohne Tensidzusatz beträgt unter diesen Bedingungen 51°. Nichterfindungsgemäße Beispiele sind entsprechend in Tabelle 3 aufgeführt. Die Zahlenangaben zum Ethylenoxid- (EO) bzw. Propylenoxid- (PO)-Gehalt sind als molar bezogen auf 1 Mol Alkohol zu verstehen. Die Alkoxylierung erfolgte blockweise in der angegebenen Reihenfolge oder durch Mischbegasung (Random/Mix).

### Säulenversuche

Als Modell der industriell durchgeführten Haufenlaugung dienten Säulenversuche, bei denen repräsentative Proben des goldhaltigen Gesteins in Säulen gepackt und mit alkalischer Cyanid-Lösung ausgelaugt wurden. Der erfindungsgemäße Zusatz von Tensiden bewirkt dann eine Erhöhung der Goldausbeute und/oder eine verbesserte Kinetik der Laugung bzw. eine Verringerung der zur Laugung benötigten Cyanidmenge.

Zur Überprüfung der verbesserten Wirksamkeit der beanspruchten tensidhaltigen Zusammensetzungen wurden jeweils 50-200 ppm Tensid enthaltende wässrige 0,05%ige Na-CN-Lösungen, die mit Natronlauge auf pH 10,5 gestellt wurden, im Vergleich zur entsprechenden kein-Tensid-enthaltenden Lösung eingesetzt. Die Laugung erfolgte jeweils über 30 Tage unter kontinuierlicher oder diskontinuierlicher Tensidzugabe bei einer Flussrate von 180 ml/Tag kg Erz.

Die Säulen hatten einen Innendurchmesser von 12 cm, eine Länge von 120 cm und waren jeweils mit 25 kg Erz befüllt. Das Erz war auf eine Partikelgröße x von 0,5 ≤ x ≤ 2,5 cm gemahlen und gesiebt. Der Goldgehalt betrug jeweils 0,5-1,5 g/t Gestein. Es wurden Erze der Minen Minera Yanacocha, SRL, Oeste Pit bzw. Quinua Pit, Cajamar ca, Peru und Minera Nueva California, Carretea Mancoskm 15, Distrito de Mancos, Provincia Yungay, Ancäsh-Peru eingesetzt, Die Ergebnisse sind in Tabelle 4 zusammengefasst.

Die kumulierten %-Angaben zur Goldausbeute beziehen sich auf den Gesamtgoldgehalt der einzelnen Säulen. Der Goldgehalt wurde mittels ICP-OES (Inductively coupled Plasma-Optical Emission Spectroscopy) auf einem Vista MPX der Firma Varian, Inc., Darmstadt bestimmt.

**Tabelle 1**

| **Tensidsystem Beispiel Nr.** | **Chem. Zusammensetzung bzw. Handelsname** |
|---|---|
| 1 . | C₁₀ Guerbet-Alkohol + 1,2 PO + 4,8 EO |
| 2 | C₁₀ Guerbet-Alkohol + 1,8 PO + 6,6 EO |
| 3 | C₁₀ Guerbet-Alkohol + 5 EO |
| 4 | C₁₀ Guerbet-Alkohol + 7,9 EO |
| 5 | C₁₀ Oxo-Alkohol + 10,1 EO |
| 6 | C₁₃-C₁₅ Oxo-Alkohol + 6,1 EO + 3,2 PO, Endgruppenverschluss mit DMS (Dimethylsulfat) |
| 7 | C₁₃ Oxo-Alkohol + 5,8 EO + 2,5 PO |
| 8 | C₁₃ Oxo-Alkohol + 5,8 EO + 2,5 PO/n-Hexanol + 5 EO 70/30 Gew.% |
| 9 | C₁₃C₁₅ Oxo-Alkohol + 6,5 EO + 2 BuO, Endgruppenverschluss mit DMS (Dimethylsulfat) |
| 10 | C₉C₁₁ -Oxo-Alkohol + 6,7 EO + 6,5 PO Mix/Random Fahrweise |
| 11 | C₁₃C₁₄ Oxo-Alkohol + 6,5 EO 2 BuO, Endgruppenverschluss mit DMS (Dimethylsulfat)/44PO + 38EO 60/40 Gew.% |
| 12 | Pluronic® PE 3100 (PO-EO Blockpolyme" risat, BASF AG Ludwigshafen) |
| 13 | Pluronide® PE 6800 (PO-EO-Blockpolymerisat, BASF AG Ludwigshafen) |
| 14 | Emulan® HE 50 (Alkoholethoxilat, BASF AG Ludwigshafen) |
| 15 | Plurafac® LF 403 (Fettalkoholethoxilat, BASF AG Ludwigshafen) |
| 16 | Lutensol® AT 11 (C₁₆C₁₈ Fettalkoholethoxilat, BASF AG Ludwigshafen) |
| 17 | Texapon® NSO (wässrige Lösung, Laurylethersulfat, Na-Salz, Cognis, Düsseldorf |

**Tabelle 2**

| **Tensidsystem Beispiel Nr.** | **Gew.% in wässrig. NaOH, pH 10** | **Kontaktwinkel [°] nach 1 sec bei 23°C** |
|---|---|---|
| 1 | 0,05 | 23 |
| 1 | 0,20 | 18 |
| 2 | 0,05 | 22 |
| 2 | 0,10 | 11 |
| 3 | 0,10 | 16 |
| 4 | 0,10 | 17 |
| 5 | 0,05 | 12 |
| 5 | 0,01 | 18 |
| 6 | 0,05 | 23 |
| 7 | 0,01 | 21 |
| 7 | 0,05 | 11 |
| 8 (Vergleich) | 0,05 | 32 |
| 9 | 0,01 | 26 |
| 9 | 0,1 | 19 |
| 7 | 0,03 | 16 |
| 7 | 0,1 | 09 |
| 10 | 0,03 | 22 |
| 10 | 0,05 | 17 |
| 11 | 0,05 | 28 |

**Tabelle 3**

| **Tensidsystem Beispiel Nr.** | **Gew.% in wässrig. NaOH, pH 10** | **Kontaktwinkel [°] nach 1 sec bei 23°C** |
|---|---|---|
| 12 | 0,2 | 49 |
| 13 | 0,2 | 46 |
| 14 | 0,2 | 44 |
| 15 | 0,2 | 47 |
| 16 | 0,2 | 48 |
| 17 | 0,2 | 43 |

| | | **Kumulierte Au-Ausbeute [%] nach** | | | | |
|---|---|---|---|---|---|---|
| **Tensidsystem Beispiel Nr.** | **Concentrat ppm** | **5 Tagen 30 Tagen** | **10 Tagen** | | **20 Tagen** | **Bemerkungen** |
| - | - | 79 | 80.5 | 82 | 82 | Yanacocha Quinua Pit |
| 10 | 50 | 80 | 82 | 83 | 84 | Kontinuierliche Tensidzugabe |
| 3 | 50 | 81 | 84 | 84.5 | 84.5 | Kontinuierliche Tensidzugabe |
| 7 | 50 | 79.5 | 82 | 84 | 86 | Kontinuierliche Tensidzugabe |
| | | | | | | |
| - | - | 80.5 | 81 | 82 | 82 | Nueva California |
| 10 | 50 | 82 | 83 | 84.5 | 85 | Kontinuierliche Tensidzugabe |
| 9 | 50 | 82.5 | 84 | 86 | 86 | Kontinuierliche Tensidzugabe |
| 10 | 80 | 81 | 82 | 82 | 82.5 | 10 Tage, dann ohne Tensidzugabe |
| | | | | | | |
| - | 78 | 79 | 79.5 | 80 | 80 | Yanacocha, Oeste Pit |
| 11 | 79 | 80 | 81 | 82 | 83 | Kontinuierliche Tensidzugabe |
| 9 | 79.5 | 81 | 82 | 84 | 84.5 | Kontinuierliche Tensidzugabe |
| 6 | 79.5 | 80.5 | 81.5 | 83 | 83.5 | Kontinuierliche Tensidzugabe |

## Patentansprüche

1. Verfahren zur Gewinnung von Metallen aus diese Metalle enthaltenden Materialien, umfassend die folgenden Verfahrensschritte:
(a) Bereitstellen eines gegebenenfalls gemahlenen metallhaltigen Materials;
(b) Bereitstellen einer wässrigen cyanidhaltigen Zusammensetzung, enthaltend mindestens ein nichtionisches Tensid, **dadurch** gekennzeichanet, dass das nichtionische Tensid in einer mit NaOH auf einen pH-Wert von 9,8 bis 10,2 eingestellten wässrigen Lösung in Konzentration von 0,01 bis 0,2 Gew.- % bei 23°C zu einer Erniedrigung des Kontaktwinkels auf Glas nach 1 Sekunde um mindestens 20 ° führt und dass das nichtionische Tensid ausgewählt ist aus der Gruppe, bestehend aus Alkoholalkoxylaten der allgemeinen Formel (I)
R¹-O-(CH₂CHR⁵-O-)ᵣ(CH₂-CH₂-O-)ₙ(CH₂-CHR⁶-O-)ₛ(CH₂CHR²-O-)ₘH (I) mit der Bedeutung
R¹ mindestens einfach verzweigtes C₄₋₂₂-Alkyl,
R² C₃₋₄-Alkyl
R⁵ C₁₋₄-Alkyl
R⁶ Methyl oder Ethyl
n mittlerer Wert von 1 bis 50
m mittlerer Wert von 0 bis 20
r mittlerer Wert von 0 bis 50
s mittlerer Wert von 0 bis 50,
wobei m mindestens 0,5 ist, wenn R⁵ Methyl oder Ethyl ist oder r den Wert 0 hat oder
der allgemeinen Formel (II)
R³-O-(CH₂CH₂-O-)ₚ(CH₂-CHR⁴-O-)_{q}H (II)
mit der Bedeutung
R³ verzweigtes oder unverzweigtes C₄₋₂₂-Alkyl
R⁴ C₃₋₄-Alkyl
p mittlerer Wert von 1 bis 50
q mittlerer Wert von 0,5 bis 20
oder
allgemeinen Formel (III)
C₅H₁₁CH(C₃H₇)CH₂O(B)ₚ(A)ₙ(B)ₘ(A)_{q}H (III)
mit der Bedeutung
A Ethylenoxy
B jeweils unabhängig C₃₋₁₀Alkylenoxy oder Gemische davon,
wobei Gruppen A und B in Form von Blöcken in der angegebenen Reihenfolge vorliegen,
p Zahl von 0 bis 10
n Zahl größer 0 bis 20,
m Zahl größer 0 bis 20
q Zahl größer 0 bis 10
p + n + m + q mindestens 1
wobei
70 bis 99 Gew.- % Alkoxylate A1, in denen C₅H₁₁ die Bedeutung n-C₅H₁₁ hat, und
1 bis 30 Gew.- % Alkoxylate A2, in denen C₅H₁₁ die Bedeutung C₂H₅CH(CH₃)CH₂ und/oder CH₃CH(CH₃)CH₂CH₂ hat, im Gemisch vorliegen
oder
aus der Gruppe der iso-Tridecanolalkoxylate der allgemeinen Formel (V)
R-O-(CₘH₂ₘO)ₓ-(CₙH₂ₙO)y-H (V)
in der
R einen iso-Tridecylrest bezeichnet,
m für die Zahl 2 und gleichzeitig n für die Zahl 3 oder 4 steht oder
m für die Zahl 3 oder 4 und gleichzeitig n für die Zahl 2 steht und
x und y unabhängig voneinander Zahlen von 1 bis 20 bedeuten,
wobei im Fall m = 2/n = 3 oder 4 die Variable x größer oder gleich y ist.
(c) Inkontaktbringen des metallhaltigen Materials in Gegenwart eines Oxidationsmittels mit der Zusammensetzung gemäß b), wobei eine mit Metallcyanid-Komplexen angereicherte Mutterlauge erhalten wird, in einer Aufwandmenge von 1 bis 30 ppm nichtionisches Tensid pro Tonne Ausgangsmaterial.

2. Verfahren nach Anspruch 1, **dadurch gekennzeichnet, dass** das Verfahren zusätzlich die Verfahrensschritte (d) und (e) umfasst:
(d) Abtrennen des Metallcyanid-Komplexes aus der Mutterlauge und
(e) Reduktion des komplexierten Metalls unter Erhalt von elementarem Metall.

3. Verfahren nach Anspruch 1 oder 2, **dadurch gekennzeichnet, dass** das Metall Gold, Silber und/oder Platin ist.

4. Verfahren nach Anspruch 3, **dadurch gekennzeichnet, dass** das Edelmetall Gold ist und das goldhaltige Material ein Gemenge ist, das neben anderen Metallen oder Metallverbindungen Gold in metallischer Form enthält.

5. Verfahren nach Anspruch 4, **dadurch gekennzeichnet, dass** das goldhaltige Material metallisches Gold, gegebenenfalls in Legierung mit Silber und/oder anderen Edelmetallen und/oder verunreinigt mit Beimengungen anderer Metalle und/oder vergesellschaftet mit Metallerzen umfasst.

6. Verfahren nach Anspruch 4 oder 5, **dadurch gekennzeichnet, dass** das goldhaltige Material ausgewählt ist aus der Gruppe, bestehend goldhaltigem Quarz, goldhaltigem Pyrit, Schrifterz (Sylvanit, AuAgTe₄), Blättererz (Nagyagit, (Pb, Au) (S, Te, Sb)₁₋₂) und Calvait (Krennerit, AuTe₂).

7. Verfahren nach Anspruch 3, **dadurch gekennzeichnet, dass** das das Edelmetall Gold ist und das goldhaltige Material Elektronikschrott ist.

8. Verfahren nach Anspruch 3, **dadurch gekennzeichnet, dass** das Edelmetall Silber ist und das silberhaltige Material ausgewählt ist aus der Gruppe, bestehend aus Silberglanz Ag₂S, Kupfersilberglanz CuAgS (= "CuS · Ag₂S") und Silberdoppelsulfide mit Arsen- und Antimonsulfid.

## Claims

1. A process for extracting metals from materials comprising these metals, comprising the following process steps:
(a) provision of an optionally milled metal-containing material;
(b) provision of an aqueous cyanide-containing composition comprising at least one nonionic surfactant, wherein the nonionic surfactant, in a concentration of from 0.01 to 0.2% by weight in an aqueous solution adjusted to a pH of from 9.8 to 10.2 with NaOH, at 23°C, leads to a reduction in the contact angle on glass after 1 second by at least 20° and wherein the nonionic surfactant is selected from the group consisting of alcohol alkoxylates of the general formula (I)
R¹-O-(CH₂-CHR⁵-O-)ᵣ(CH₂-CH₂-O-)ₙ(CH₂-CHR⁶-O-)ₛ(CH₂-CHR²-O-)ₘH (I)
where
R¹ is at least singly branched C₄₋₂₂-alkyl
R² is C₃₋₄-alkyl
R⁵ is C₁₋₄-alkyl
R⁶ is methyl or ethyl
N has a mean value of from 1 to 50
m has a mean value of from 0 to 20
r has a mean value of from 0 to 50
s has a mean value of from 0 to 50,
m being at least 0.5 if R⁵ is methyl or ethyl or r has the value 0 or
of the general formula (II) R³-O-(CH₂-CH₂-O-)ₚ(CH₂-CHR⁴-O-)_{q}H (II)
where
R³ is branched or straight-chain C₄₋₂₂-alkyl
R⁴ is C₃₋₄-alkyl
p has a mean value of from 1 to 50
q has a mean value of from 0.5 to 20
or
of the general formula (III)
C₅H₁₁CH(C₃H₇)CH₂O(B)ₚ (A)ₙ(B)ₘ(A)_{q}H (III)
where
A is ethyleneoxy
B, in each case independently, is C₃₋₁₀- alkyleneoxy or mixtures thereof,
groups A and B being present in the form of blocks in the stated sequence,
p is a number from 0 to 10
n is a number greater than 0 to 20
m is a number greater than 0 to 20
q is a number greater than 0 to 10
p + n + m + q is at least 1,
from 70 to 99% by weight of alkoxylates A1 in which C₅H₁₁ has the meaning n-C₅H₁₁ and
from 1 to 30% by weight of alkoxylates A2 in which C₅H₁₁ has the meaning C₂H₅CH(CH₃)CH₂ and/or CH₃CH(CH₃)CH₂CH₂ being present in the mixture
or
from the group consisting of the isotridecanol alkoxylates of the general formula (V)
R-O-(CₘH₂ₘO)ₓ-(CₙH₂ₙO)_{y}-H (V)
where
R is an isotridecyl radical,
m is the number 2 and at the same time n is the number 3 or 4 or
m is the number 3 or 4 and at the same time n is the number 2 and
x and y, independently of one another, are numbers from 1 to 20,
the variable x being greater than or equal to y where m = 2/n = 3 or 4;
(c) bringing of the metal-containing material into contact with the composition according to b) in the presence of an oxidizing agent, a mother liquor enriched with metal cyanide complexes being obtained, in an amount of from 1 to 30 ppm of nonionic surfactant per metric ton of starting material.

2. The process according to claim 1, wherein the process additionally comprises the process steps (d) and (e):
(d) separation of the metal cyanide complex from the mother liquor and
(e) reduction of the complexed metal to give elemental metal.

3. The process according to claim 1 or 2, wherein the metal is gold, silver and/or platinum.

4. The process according to claim 3, wherein the noble metal is gold and the gold-containing material is a mixture which, in addition to other metals or metal compounds, comprises gold in metallic form.

5. The process according to claim 4, wherein the gold-containing material comprises metallic gold, if appropriate as an alloy with silver and/or other noble metals and/or contaminated with impurities of other metals and/or together with metal ores.

6. The process according to claim 4 or 5, wherein the gold-containing material is selected from the group consisting of gold-containing quartz, gold-containing pyrite, sylvanite (AuAgTe₄), nagyagite (Pb, Au) (S, Te, Sb)₁₋₂ and calvaite (krennerite, AuTe₂).

7. The process according to claim 3, wherein the noble metal is gold and the gold-containing material is electronic scrap.

8. The process according to claim 3, wherein the noble metal is silver and the silver-containing material is selected from the group consisting of silver glance Ag₂S, stromeyerite CuAgS (= "CuS · Ag₂S") and silver double sulfides with arsenic sulfide and antimony sulfide.

## Revendications

1. Procédé pour l'extraction de métaux à partir de matériaux contenant ces métaux, comprenant les étapes de processus suivantes:
(a) fourniture d'un matériau métallifère, éventuellement broyé ;
(b) fourniture d'une composition aqueuse contenant d'un cyanure, qui contient au moins un tensioactif non ionique, **caractérisée en ce que** le tensioactif non ionique conduit à une diminution de l'angle de contact sur verre d'au moins 20° après 1 seconde, à 23°C, dans une solution aqueuse à une concentration de 0,01 à 0,2 % en poids, ajustée à un pH de 9,8 à 10,2 avec NaOH et **en ce que** le tensioactif non ionique est choisi dans le groupe constitué par des produits d'alcoxylation d'alcools de formule générale (I)
R¹O-(CH₂-CHR⁵-O-)ᵣ(CH₂-CH₂-O-)ₙ(CH₂-CHR⁶-O-)ₛ-(CH₂-CHR²-O-)ₘH (I)
où
R¹ représente un groupe alkyle en C₄-C₂₂ au moins une fois ramifié,
R² représente un groupe alkyle en C₃-C₄,
R⁵ représente un groupe alkyle en C₁-C₄,
R⁶ représente le groupe méthyle ou éthyle,
n a une valeur moyenne de 1 à 50,
m a une valeur moyenne de 0 à 20,
r a une valeur moyenne de 0 à 50,
s a une valeur moyenne de 0 à 50,
m étant au moins 0,5 lorsque R⁵ est le groupe méthyle ou éthyle ou r a la valeur 0, ou
de formule générale (II) R³-O-(CH₂-CH₂-O-)ₚ(CH₂-CHR⁴-O-)_{q}H (II)
où
R³ représente un groupe alkyle en C₄-C₂₂ ramifié ou non ramifié,
R⁴ représente un groupe alkyle en C₃-C₄,
p a une valeur moyenne de 1 à 50,
q a une valeur moyenne de 0,5 à 20,
ou
de formule générale (III)
C₅H₁₁CH (C₃H₇) CH₂O (B) p (A)ₙ (B)ₘ (A) qH (III)
où
A représente un groupe éthylène-oxy,
B représente chaque fois indépendamment un groupe alkylène-oxy en C₃-C₁₀ ou des mélanges de ceux-ci ;
les groupes A et B se trouvant sous forme de séquences en l'ordre indiqué,
p est un nombre de 0 à 10,
n est un nombre de >0 à 20,
m est un nombre de >0 à 20,
q est un nombre de >0 à 10,
la somme p + n + m + q est au moins égale à 1,
70 à 99 % en poids de produits d'alcoxylation A1 dans lesquels C₅H₁₁ a la signification de n-C₅H₁₁, et 1 à 30 % en poids de produits d'alcoxylation A2 dans lesquels C₅H₁₁ a la signification de
C₂H₅CH(CH₃)CH₂ et/ou de CH₃CH(CH₃)CH₂CH₂, se trouvant en mélange
ou
dans le groupe des produits d'alcoxylation d'isotridécanol de formule générale (V)
R-O-(CₘH₂ₘO)ₓ-(CₙH₂ₙO)_{y}-H (V)
dans laquelle
R représente un radical iso-tridécyle,
m représente le nombre 2 et en même temps n représente le nombre 3 ou 4 ou
m représente le nombre 3 ou 4 et en même temps n représente le nombre 2 et
x et y représentent, indépendamment l'un de l'autre, des nombres allant de 1 à 20, dans le cas où m = 2/n = 3 ou 4, la variable x étant supérieure ou égale à y,
(c) mise en contact du matériau métallifère, en présence d'un oxydant, avec la composition selon b), pour obtenir une liqueur-mère enrichie en complexes de cyanure métallique, en une quantité utilisée de 1 à 30 ppm de tensioactif non ionique par tonne de matériau de départ.

2. Procédé selon la revendication 1, **caractérisé en ce que** le procédé comprend en outre les étapes de processus (d) et (e):
(d) séparation du complexe de cyanure métallique d'avec la liqueur-mère et
(e) réduction du métal complexé, avec obtention de métal élémentaire.

3. Procédé selon la revendication 1 ou 2, **caractérisé en ce que** le métal est l'or, l'argent et/ou le platine.

4. Procédé selon la revendication 3, **caractérisé en ce que** le métal noble est l'or et le matériau aurifère est un agrégat qui, en plus d'autres métaux ou composés métalliques, contient de l'or sous forme métallique.

5. Procédé selon la revendication 4, **caractérisé en ce que** le matériau aurifère comprend de l'or métallique, éventuellement en alliage avec de l'argent et/ou d'autres métaux nobles et/ou contaminé avec des impuretés d'autres métaux et/ou associé avec des minerais métalliques.

6. Procédé selon la revendication 4 ou 5, **caractérisé en ce que** le matériau aurifère est choisi dans le groupe constitué par le quartz aurifère, la pyrite aurifère, l'or graphique (sylvanite, AuAgTe₄), l'or gris lamellaire (nagyagite, (Pb, Au) (S, Te, Sb)₁₋₂) et la calavérite (krennerite, AuTe₂).

7. Procédé selon la revendication 3, **caractérisé en ce que** le métal noble est l'or et le matériau aurifère est un rebut électronique.

8. Procédé selon la revendication 3, **caractérisé en ce que** le métal noble est l'argent et le matériau argentifère est choisi dans le groupe constitué par l'argentite Ag₂S, l'argentite cuprifère CuAgS (= "CuS.Ag₂S") et des sulfures doubles d'argent avec le sulfure d'arsenic et d'antimoine.
